# EUROPEAN PATENT SPECIFICATION

(11) **EP 2 647 153 B1**
(45) Date of publication and mention of the grant of the patent: **28.01.2015**
(21) Application number: 10787089.1
(22) Date of filing: 29.11.2010
(51) Int. Cl.: H04L 1/18

(54) **METHODS AND DEVICES FOR COMPONENT CARRIER AGGREGATION CONTROL**
VERFAHREN UND VORRICHTUNG ZUR STEUERUNG EINER AGGREGATION VON KOMPONENTENTRÄGERN
PROCÉDÉ ET DISPOSITIF POUR CONTRÔLER UNE AGGRÉGATION DE PORTEUSES COMPOSANTES

(43) Date of publication of application: 09.10.2013
(73) Proprietor: Telefonaktiebolaget L M Ericsson (PUBL), 164 83 Stockholm (SE)
(72) Inventor: SACHS, Joachim, 191 34 Sollentuna (SE); BALDEMAIR, Robert, S-171 70 Solna (SE); IRNICH, Tim, 41460 Neuss (DE); KRONANDER, Jonas, S-753 17 Uppsala (SE)
(74) Representative: Pfeifer, Torsten
(86) International application number: PCT/EP2010/068430
(87) International publication number: WO 2012/072100

(56) References cited:
- WO-A2-2009/157859
- WO-A2-2010/050688
- US-A1- 2005 207 345

## Description

### Technical Field

The present invention relates to communication, in particular to methods for controlling component carrier aggregation and to corresponding devices and systems.

### Background

In mobile communication networks, e.g., according to the technical specifications of the Third Generation Partnership Project (3GPP), concepts have been introduced according to which several carriers operated in different frequency channels can be bundled in a single radio link. These concepts are also referred to as carrier aggregation. More generally, carrier aggregation can be defined as defining a constellation of two or more component carriers to be used for communication of data messages. Examples of carrier aggregation are contiguous carrier aggregation, in which the constellation consists of two or more adjacent component carriers, non contiguous intra-band carrier aggregation, in which the constellation consists of two or more non- adjacent component carriers from the same frequency band or spectrum, and inter-band carrier aggregation or spectrum aggregation, in which the constellation consists of two or more component carriers from at least two different frequency bands or spectra. In the following, the term spectrum will be used to refer to a frequency band, i.e., a contiguous frequency range, or to a group of frequency bands which do not need to be contiguous among each other.

Typically carrier aggregation in a mobile communication network is done with component carriers from a spectrum allocated to the radio access technology of the mobile communication network, e.g., a licensed spectrum. However, the number of such spectra and also the number of component carriers in such spectra is limited. A way of increasing the number of component carriers available for carrier aggregation is so-called secondary or opportunistic use of a spectrum that is primarily used by another technology, e.g., a television, a satellite or a radar technology. In this way, a significant increase of transmission capacity can be obtained. However, it also needs to be taken into account that the secondary use of a spectrum does not interfere with a primary user of this spectrum. For example, regulatory rules for secondary spectrum access of television channels have been defined by the United States Federal Communications Commission (US FCC).

Different types of primary users exist. For example, in a spectrum allocated to television technology, primary users may be television broadcasting stations, so called Program Making and Special Events (PSME) applications such as wireless microphones or the like. Spectrum usage by television broadcasting stations is rather static. As compared to that, PMSE applications, can in principle pop up anytime and anywhere, e.g., due to an event on which television journalists produce television news coverage.

Typically, a secondary spectrum may be used opportunistically by the mobile communication network while not interfering with a primary user of the secondary spectrum, e.g., while primary users are inactive. However, a primary user may become active at some time, which means that component carriers in the secondary spectrum may need to be vacated very quickly, e.g., within some milliseconds, by deactivating use of the component carriers. On the other hand, the deactivation process should not adversely affect data communication, e.g., by producing data losses.

Further, component carriers may also need to be vacated by a secondary user due to a coexistence with one or more other secondary users that, according to a scheme for frequency sharing among secondary users which is not based on strict allocation or licensing of component carriers or spectra, might apply completely different technologies so that the same component carrier cannot be shared between the different secondary users.

Furthermore, situations in which certain component carriers need to be vacated may also arise within the same mobile communication network and radio access technology, e.g., if a certain component carrier is to be reassigned from one cell of the mobile communication network to another. Then the component carrier would need to be vacated by the cell so that it can be used by the other cell. Usage of a certain component carrier may also be deactivated for other reasons, e.g., in view of energy consumption.

In certain types of mobile communication networks, e.g., according to 3GPP Long Term Evolution (LTE) or Universal Terrestrial Mobile Telecommunications System (UMTS), the process for deactivating component carriers also needs to take into account that retransmission protocols may be implemented for improving reliability of data transmission. Examples of such retransmission protocols are the Radio Link Control (RLC) protocols as defined in 3GPP technical specifications 36.322 (for LTE) or 25.322 (for UMTS), which provide Automatic Repeat Request (ARQ) functionality, and the Medium Access Control (MAC) protocols as defined in 3GPP technical specifications 36.321 (for LTE) or 25.321 (for UMTS), which provide Hybrid Automatic Repeat Request (HARQ) functionality. When a component carrier is to be deactivated, and therefore no new transmissions are scheduled on this component carrier, the operation of the HARQ protocol will typically cause that the component carrier is not vacated immediately, but only after ongoing HARQ processes for this component carrier have been terminated. It may take considerable time until the component carrier is actually vacated. If in contrast, the component carrier is immediately vacated by enforcing a termination of the ongoing HARQ processes, this leads to a data loss. An automatic recovery from this loss, e.g., by a higher retransmission layer such as ARO in the RLC layer, may take considerable time and decrease the transmission performance.

Document WO 2010/050688 describes a method and devices of transport block retransmission in a wireless communication system employing carrier aggregation. Retransmitting transport blocks in a base station of a wireless communication system employing carrier aggregation comprises mapping each of a plurality of transport blocks to each of a plurality of component carriers using a first mapping pattern and transmitting the plurality of transport blocks to a mobile station. Further it comprises recognizing that the plurality of transport blocks are not transmitted successfully and mapping each of the plurality of transport blocks to each of the plurality of component carriers using a second mapping pattern and retransmitting the plurality of transport blocks to the mobile station.

Accordingly, there is a need for techniques which allow for efficiently controlling component carrier aggregation.

### Summary

According to an embodiment of the invention, a method of controlling aggregation of component carriers is provided. According to the method, data messages are communicated on multiple component carriers. The communication is accomplished on the basis of a retransmission protocol. The retransmission protocol requires sending of an acknowledgement message in response to verifying correct receipt of a data message. In response to a decision to deactivate transmission on one of the component carriers, the retransmission protocol is triggered to retransmit those data messages, for which no acknowledgement message of the retransmission protocol has been received. The retransmission is accomplished on at least one other of the component carriers.

According to a further embodiment of the invention, a communication device is provided. The communication device may be an access node or a mobile terminal. The communication device is provided with a controller and an interface. The interface is configured to communicate data messages on multiple component carriers. The communication is accomplished on the basis of a retransmission protocol. The retransmission protocol requires sending of an acknowledgement message in response to verifying correct receipt of a data message. The controller is configured to trigger the retransmission protocol to retransmit those data messages, for which no acknowledgement message of the retransmission protocol has been received. This triggering is in response to a decision to deactivate transmission on one of the component carriers. The retransmission is accomplished on at least one other of the component carriers.

According to a further embodiment of the invention, a communication system is provided. The communication system includes at least a transmitter and a receiver. The transmitter comprises a transmitting entity configured to transmit data messages on multiple component carriers. The transmission of the data messages is accomplished on the basis of a retransmission protocol. The retransmission protocol requires sending of an acknowledgement message in response to verifying correct receipt of a data message. The receiver comprises a receiving entity configured to receive the data messages on the basis of the retransmission protocol. At least one of the transmitter and the receiver comprises a controller configured to trigger the retransmission protocol to retransmit those data messages for which no acknowledgement message of the retransmission protocol has been received. This triggering is in response to a decision to deactivate transmission on one of the component carriers. The retransmission is accomplished on at least one other of the component carriers.

According to further embodiments, other methods, devices, or computer program products for implementing the methods may be provided.

### Brief Description of the Drawings

Fig. 1 schematically illustrates a mobile communication network environment in which concepts of carrier aggregation according to an embodiment of the invention are applied.
Fig. 2 schematically illustrates a communication system for implementing concepts according to an embodiment of the invention.
Fig. 3 shows a signaling diagram for illustrating an exemplary scenario of controlling carrier aggregation according to an embodiment of the invention.
Fig. 4 shows a signaling diagram for illustrating a further exemplary scenario of controlling carrier aggregation according to an embodiment of the invention.
Fig. 5 shows a flowchart for schematically illustrating operation of a carrier level retransmission protocol in an embodiment of the invention.
Fig. 6 shows a flowchart for schematically illustrating operation of a carrier level retransmission protocol in a further embodiment of the invention.
Fig. 7 schematically illustrates structures of a communication device according to an embodiment of the invention.
Figs. 8 shows a signaling diagram for illustrating a further exemplary scenario of controlling carrier aggregation according to an embodiment of the invention.
Fig. 9 shows a signaling diagram for illustrating a further exemplary scenario of controlling carrier aggregation according to an embodiment of the invention.
Figs. 10 shows a signaling diagram for illustrating a further exemplary scenario of controlling carrier aggregation according to an embodiment of the invention.
Fig. 11 shows a signaling diagram for illustrating a further exemplary scenario of controlling carrier aggregation according to an embodiment of the invention.
Figs. 12 shows a signaling diagram for illustrating a further exemplary scenario of controlling carrier aggregation according to an embodiment of the invention.
Fig. 13 shows a signaling diagram for illustrating a further exemplary scenario of controlling carrier aggregation according to an embodiment of the invention.
Figs. 14 shows a signaling diagram for illustrating a further exemplary scenario of controlling carrier aggregation according to an embodiment of the invention.
Fig. 15 shows a signaling diagram for illustrating a further exemplary scenario of controlling carrier aggregation according to an embodiment of the invention.
Fig. 16 shows a flowchart for illustrating a method according to an embodiment of the invention.

### Detailed Description of Embodiments

In the following, the invention will be explained in more detail by referring to exemplary embodiments and to the accompanying drawings. The illustrated embodiments relate to concepts for controlling carrier aggregation in radio communication between mobile terminals and an access node. In the illustrated examples, it will be assumed that the radio communication is implemented according to 3GPP LTE. However, it is to be understood that the illustrated concepts may also be applied in other types of mobile communication networks.

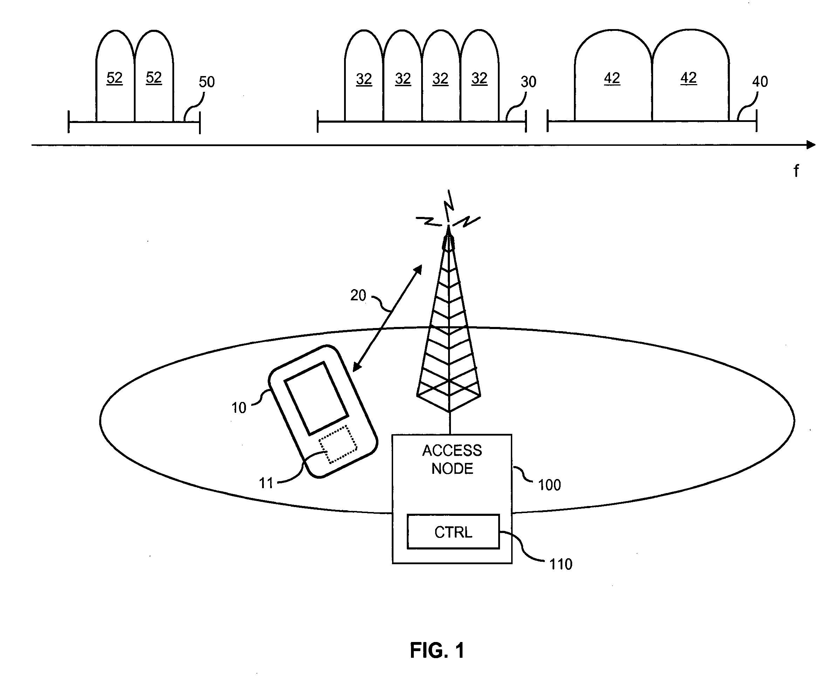

Fig. 1 schematically illustrates a mobile communication network environment, i.e., infrastructure of a mobile communication network, represented by an access node 100 and a mobile terminal 10 to be used in the mobile communication network. The mobile terminal 10 may be, e.g., a mobile phone, portable computer, or other type of user equipment (UE). In the following, the mobile terminal 10 will also be referred to as UE. The access node 100 is provided with a network based aggregation controller (CTRL) 110. The mobile terminal 10 is provided with a terminal based aggregation controller 11. As illustrated, the mobile terminal 10 communicates with the access node 100 via a radio link 20. In accordance with the illustrated 3GPP LTE scenario, the access node 100 may be an enhanced Node B (eNB) and the radio link 20 may be established using the Uu radio interface. The radio link 20 may carry data traffic in a downlink (DL) direction from the access node 100 to the UE 10 and/or in an uplink (UL) direction from the UE 10 to the access node 100.

In accordance with the concepts as described herein, carrier aggregation may be used for the radio communication between the mobile terminals 10 and the access node 100. That is to say, a constellation of multiple component carriers may be used for transmitting radio signals on the radio link 20 between the UE 10 and the access node 100. In Fig. 1, different spectra 30, 40, 50 are illustrated, from which the component carriers can be selected. The spectrum 30 is illustrated as including component carriers 32, the spectrum 40 is illustrated as including component carriers 42, and the spectrum 50 is illustrated as including component carriers 52. Each of the component carriers 32, 42, 52 will typically have at least one supported bandwidth. In some embodiments, some of the component carriers 32, 42, 52 may support multiple bandwidths, e.g., as defined for 3GPP LTE.

In the following, it will be assumed that the spectrum 30 is a spectrum which is assigned to a radio access technology of the mobile communication network. Accordingly, in the illustrated 3GPP LTE scenario, the spectrum 30 may be an LTE spectrum as defined in 3GPP technical specification 36.101. The other spectra 40, 50 may be spectra which are not assigned to the radio access technology of the mobile communication network. For example, the other spectra 40, 50 may be assigned to other technologies, such as a television technology, a radar technology, or a satellite technology. However, in some embodiments also one or more of the other spectra 40, 50 could be assigned to the radio access technology of the mobile communication network, e.g., to be used as auxiliary spectra. In some embodiments, one or more of the other spectra 40, 50 could be assigned to the radio access technology of the mobile communication network, but be licensed to the operator of another mobile communication network using the same radio access technology. In such a scenario this operator may still allow secondary usage of his licensed spectrum, e.g., in a temporally or regionally limited manner. As illustrated, the other spectra 40, 50 may be in a different frequency range than the spectrum 30, i.e., in a higher frequency range, as the spectrum 40, or in a lower frequency range, as the spectrum 50. However, it is to be understood that the other spectra 40, 50 may also overlap with the spectrum 30. That is to say, in some scenarios there may be arrangements of interleaved frequency bands belonging to different spectra 30, 40, 50.

According to embodiments as described herein, capacity of the mobile communication network may be expanded by carrier aggregation with additional usage of the component carriers 42, 52 from the other spectra 40, 50. In some embodiments, these are not assigned to the radio access technology of the mobile communication network. In the case of usage of a component carrier 42, 52 from one of the other spectra 40, 50, the constellation of component carriers used on the radio link 20 will therefore include one or more component carriers 32 from the spectrum 30 and one or more component carriers 42, 52 from the spectrum 40 and/or 50. In some embodiments, carrier aggregation may also be based on component carriers 32 from the spectrum 30 only.

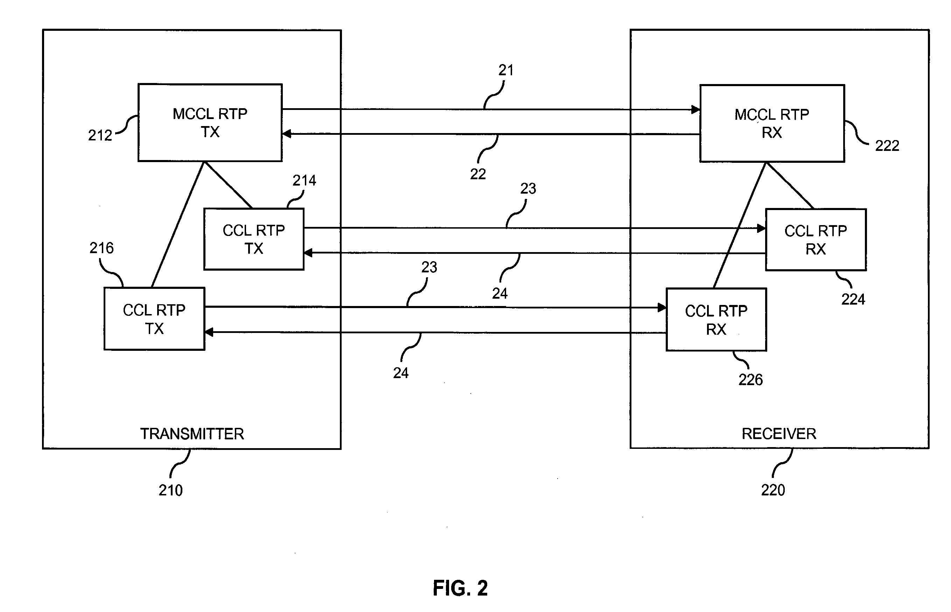

Fig. 2 further illustrates usage of retransmission protocols in the mobile communication network environment of Fig.1. For this purpose, Fig. 2 shows a communication system which includes a transmitter 210 and a receiver 220. For DL transmissions in the mobile communication network environment of Fig.1, the transmitter 210 would be in the access node 100, and the receiver 220 would be in the UE 10. For UL transmissions in the mobile communication network environment of Fig.1, the transmitter 210 would be in the UE 10, and the receiver 220 would be in the access node 100. Fig. 2 illustrates different layers of communication between the transmitter 210 and the receiver 220.

In a higher layer, the transmitter 210 includes a transmitter (TX) 212 configured to transmit data messages 21 on multiple component carriers. The higher layer may be a protocol layer on the radio link control level. Similarly, the receiver 220 includes a receiver (RX) 222 configured to receive the data messages 21 from the multiple component carriers. The transmitter 212 and the corresponding receiver 222 implement a retransmission protocol operating on a multi component carrier level, which in the following will also be referred to as multi component carrier level retransmission protocol (MCCL RTP). The transmitter 212 may also be referred to as a transmitting entity of the MCCL RTP. The receiver 222 may also be referred to as a receiving entity of the MCCL RTP. The MCCL RTP handles transmissions on a multiple component carriers by requiring that, in response to correctly receiving a data message 21 on a set of multiple component carriers, the receiver 222 returns an acknowledgement message 22 to the corresponding transmitter 212. There are multiple ways for transmitting the acknowledgement message 22. For example, a status report can be sent to notify acknowledgements for a given number of data messages 21, e.g., after receiving the given number of data messages 21. Sending of the status report can also be triggered by receiving a message with a specific indication. Further, the status report can be sent on a periodic basis or when a certain proportion of a retransmission window size has been reached. The status report may also include negative acknowledgments to indicate incorrectly received data messages 21. As used herein, "multi component carrier level" means that the data messages 21 and the acknowledgement messages 22 are transmitted using a set of multiple component carriers. The set may however depend on the direction of transmission, i.e., the acknowledgement message 22 may be transmitted using the same or another set of component carriers than the corresponding data message 21. The data message 21 or the acknowledgement message 22 may be transmitted in a distributed manner on multiple component carriers from the set, or a single component carrier may be selected from the set for transmitting the data message 21 or the acknowledgement message 22. The MCCL RTP may be an Automatic Repeat Request (ARQ) protocol and may correspond to the RLC protocol defined in 3GPP technical specifications 25.322 or 36.322.

In a lower layer, the transmitter 210 includes a respective transmitter (TX) 214, 216 for each component carrier. The lower layer may be a protocol layer on the Medium Access Control (MAC) level. Similarly, the receiver 220 includes a respective receiver (RX) 214, 216 for each of the component carriers. The transmitters 214, 216 and the corresponding receivers 224, 226 implement a retransmission protocol operating on a component carrier level, which in the following will also be referred to as component carrier level retransmission protocol (CCL RTP). The transmitters 214, 216 may also be referred to as transmitting entities of the CCL RTP. The receivers 224, 226 may also be referred to as receiving entities of the CCL RTP. The CCL RTP handles transmissions on a single component carrier by requiring that, in response to correctly receiving a data message 23 on the component carrier, the receiver 224, 226 returns an acknowledgement message to the corresponding transmitter 214, 216. Here, "component carrier level" means that the data message 23 and the corresponding acknowledgement message 24 are transmitted on a single component carrier. The CCL RTP may be a Hybrid Automatic Repeat Request (HARQ) protocol and may correspond to the HARQ protocol defined in 3GPP technical specifications 36.321 or 25.321.

The CCL RTP typically has a feedback time which is shorter than a feedback time of the MCCL RTP. The data messages 21 of the MCCL RTP and the data messages of the CCL RTP may be based on different types of protocol data unit (PDU). Similarly, the acknowledgment messages 22 of the MCCL RTP and the acknowledgement messages of the CCL RTP may be based on different types of PDU. In accordance with the illustrated protocol hierarchy, the data messages 21 of the MCCL RTP protocol are assembled from information in the data messages 23 of the CCL protocol.

It is to be understood that the transmitter 210 and/or the receiver 220 may be provided with further structures which are not illustrated in Fig. 2. For example, protocol entities for implementing other protocol layers or other protocol functions may be provided. Such protocol entities may be, e.g., MAC entities or physical layer entities.

In order to provide efficient control of carrier aggregation, concepts of controlling carrier aggregation according to embodiments of the invention as explained in the following are based on triggering the MCCL RTP to retransmit the data messages 21 for which no acknowledgement message 22 has been received. This is accomplished in response to a decision to deactivate one of the component carriers used for transmitting the data messages 21 of the MCCL RTP.

In other words, the retransmission is triggered by the decision to deactivate transmission on one of the component carriers. The decision to deactivate may further serve as trigger to actually deactivate the component carrier. The temporal relation of both triggering processes may be adjustable to minimize the vacation time of the carrier that is to be deactivated. For example, the retransmission and the deactivation may be triggered substantially concurrently or at the same time, e.g., by the same triggering event, or the triggering of the retransmission may stimulate retransmission shortly after or even before the triggering of the deactivation stimulates deactivation of the component carrier.

In each case, the retransmission will be triggered before usual operation of the MCCL RTP would trigger a retransmission, e.g., due to not receiving an acknowledgement message, due to receiving a negative acknowledgement message, or due to the expiration of a timer. In this way, the retransmission is initiated early, and delays or data losses due to the deactivation can be avoided. The triggering of the retransmission may further be accompanied by sending an acknowledgement message 24 of the CCL RTP of the component carrier to be deactivated irrespective of correctly receiving the corresponding data message 23 of the CCL RTP. In this way, retransmission of data messages 23 on the component carrier by the CCL RTP is avoided and termination of ongoing processes of the CCL RTP protocol can be expedited, which allows for quickly vacating the component carrier. Also, transmission on the component carrier may be deactivated without causing retransmission of data messages 23 on the component carrier by the CCL RTP on this component carrier, e.g., by actively terminating ongoing processes of the CCL RTP.

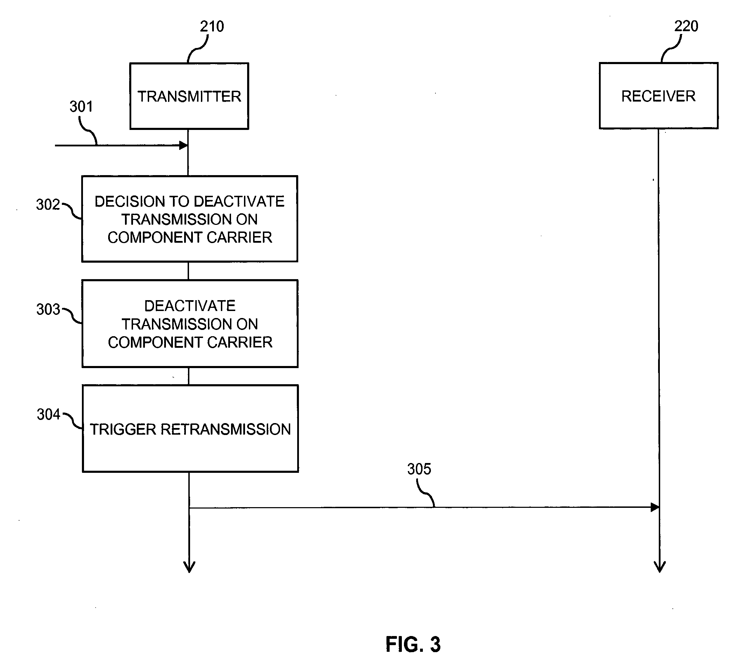

Fig. 3 shows a signaling diagram for illustrating an exemplary process of deactivating transmission on an aggregated component carrier. The process involves the transmitter 210 and the receiver 220, which communicate the data messages 21 the basis of the MCCL RTP. In the scenario of Fig. 3, the decision to deactivate transmission on the component carrier is received or taken on the side of the transmitter 210.

As illustrated, the transmitter 210 may receive an indication 301. The indication 301 may include information which allows the transmitter 210 to decide whether the component carrier is to be deactivated. The indication 301 may be a trigger message for triggering deactivation of the component carrier and be received from a decision entity which has decided to deactivate the component carrier. The indication 301 may also include information which is to be combined with other information in the transmitter 210 for locally taking the decision in the transmitter 210. For example, the indication 301 could include measurement results with respect to the component carrier, which may be combined with results of measurements performed by the transmitter 210. Also, the indication 301 could include information from a spectrum management node. The information in the indication 301 and/or the measurements performed by the transmitter 210 may relate to activity on the component carrier, e.g., activity of a primary user of the component carrier. For example, the activity on the component carrier could be determined from beacon signals transmitted by the primary user.

At step 302, the transmitter 210 locally takes the decision to deactivate transmission on the component carrier. If the indication 301 is a trigger message, the decision taken at step 302 will be to deactivate transmission on the component carrier in response to receiving the indication 301. In some cases, the transmitter may do further processing of the information in the indication 301, e.g., by combing the information in the indication 301 with other information available at the transmitter 210. For example, measurement results on the component carrier included in the message 301 could be combined with results of measurements performed by the transmitter 210. The decision of step 302 could then be taken on the basis of the combined information.

At step 303, the transmitter 210 deactivates transmission on the component carrier. This may involve controlling the CCL RTP transmitter corresponding to this component carrier to stop transmitting on the component carrier. Further, this may involve terminating ongoing processes of the CCL RTP with respect to the component carrier, e.g., by deleting all data from a retransmission buffer of the CCL RTP.

At step 304, the transmitter 210 triggers the retransmission of data messages 21 by the MCCL RTP. For this purpose, the decision to deactivate the component carrier may be passed to the MCCL RTP transmitter. For example, the CCL RTP transmitter corresponding to the deactivated component carrier could indicate its deactivation to the MCCL RTP transmitter, e.g., by sending a retransmission trigger message. Alternatively, the decision to deactivate the component carrier as taken at step 302 could also be directly passed to the MCCL RTP transmitter.

As illustrated by 305, the MCCL RTP will then cause the transmitter 210 to retransmit the data messages 21 for which no acknowledgement message 22 has been received. These data messages 21 are stored at the transmitter 210 in a retransmission buffer of the MCCL RTP transmitter. The retransmission is accomplished on at least one other of the component carriers, i.e., the retransmission does not use the deactivated component carrier. The retransmission will also include the data of terminated processes of the CCL RTP on the deactivated component carrier.

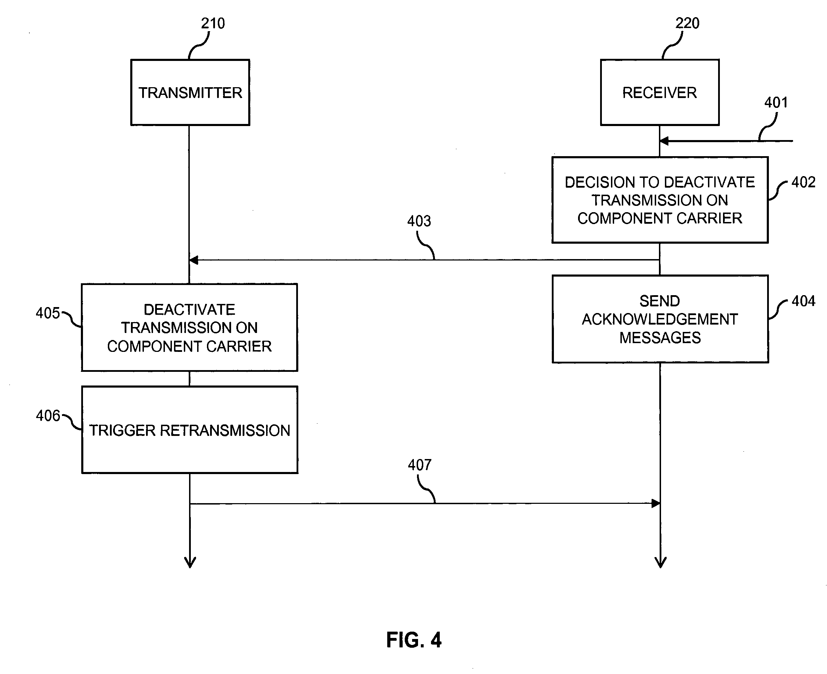

Fig. 4 shows a signaling diagram for illustrating a further exemplary process of deactivating transmission on an aggregated component carrier. The process involves the transmitter 210 and the receiver 220, which communicate data messages 21 the basis of the MCCL RTP. In the scenario of Fig. 4, the decision to deactivate transmission on the component carrier is received or taken on the side of the receiver 220.

As illustrated, the receiver 220 may receive an indication 401. The indication 401 may include information which allows the receiver 220 to decide whether the component carrier is to be deactivated. The indication 401 may be a trigger message for triggering deactivation of the component carrier and be received from a decision entity which has decided to deactivate the component carrier. The indication 401 may also include information which is to be combined with other information in the receiver 220 for locally taking the decision in the receiver 220. For example, the indication 401 could include measurement results with respect to the component carrier, which may be combined with results of measurements performed by the receiver 220. Also, the indication 401 could include information from a spectrum management node. The information in the indication 401 and/or the measurements performed by the receiver 220 may relate to activity on the component carrier, e.g., activity of a primary user of the component carrier. For example, the activity on the component carrier could be determined from beacon signals transmitted by the primary user.

At step 402, the receiver 220 locally takes the decision to deactivate transmission on the component carrier. If the indication 401 is a trigger message, the decision taken at step 402 will be to deactivate transmission on the component carrier in response to receiving the indication 401. In some cases, the transmitter may do further processing of the information in the indication 401, e.g., by combing the information in the indication 401 with other information available at the receiver 220. For example, measurement results on the component carrier included in the message 401 could be combined with results of measurements performed by the receiver 220. The decision of step 402 could then be taken on the basis of the combined information.

The receiver 220 then triggers the retransmission by the MCCL RTP. For this purpose, the receiver 220 transmits a retransmission trigger message 403 to the transmitter 210. The retransmission trigger message 403 may include a message of the MCCL RTP and be transmitted from the MCCL RTP receiver to the MCCL RTP transmitter in a similar manner as the acknowledgement messages 22. For example, the MCCL RTP message used for triggering the retransmission could be a status report indicating which data messages have been successfully received. Alternatively or in addition, the retransmission trigger message 403 may include a message of the CCL RTP which is transmitted from the CCL RTP receiver to the CCL RTP transmitter in a similar manner as the acknowledgement messages 24. For example, this message of the CCL RTP could be a message indicating the decision to deactivate transmission on the component carrier to the corresponding CCL RTP transmitter. For triggering the retransmission, the CCL RTP transmitter in the transmitter 210 could then transmit a retransmission trigger message to the MCCL transmitter in the transmitter 210.

As indicated by step 404, triggering of the retransmission by the receiver 220 may further be accompanied by sending acknowledgement messages of the CCL RTP irrespectively of verifying correct receipt of a data message 23 of the CCL RTP by the CCL RTP receiver corresponding to the component carrier to be deactivated. In this way, termination of ongoing processes of the CCL RTP can be expedited.

At step 405, the transmitter 210 deactivates transmission on the component carrier. This is accomplished in response to receiving the retransmission trigger message 403. This may involve controlling the CCL RTP transmitter corresponding to this component carrier to stop transmitting on the component carrier. Further, this may involve terminating ongoing processes of the CCL RTP with respect to the component carrier, e.g., by deleting all data from a retransmission buffer of the CCL RTP.

As illustrated by 407, the MCCL RTP will then cause the transmitter 210 to retransmit the data messages 21 for which no acknowledgement message 22 has been received. These data messages are stored at the transmitter 210 in a retransmission buffer of the MCCL RTP transmitter. The retransmission is accomplished on at least one other of the component carriers, i.e., the retransmission does not use the deactivated component carrier. The retransmission will also include the data of terminated processes of the CCL RTP on the deactivated component carrier.

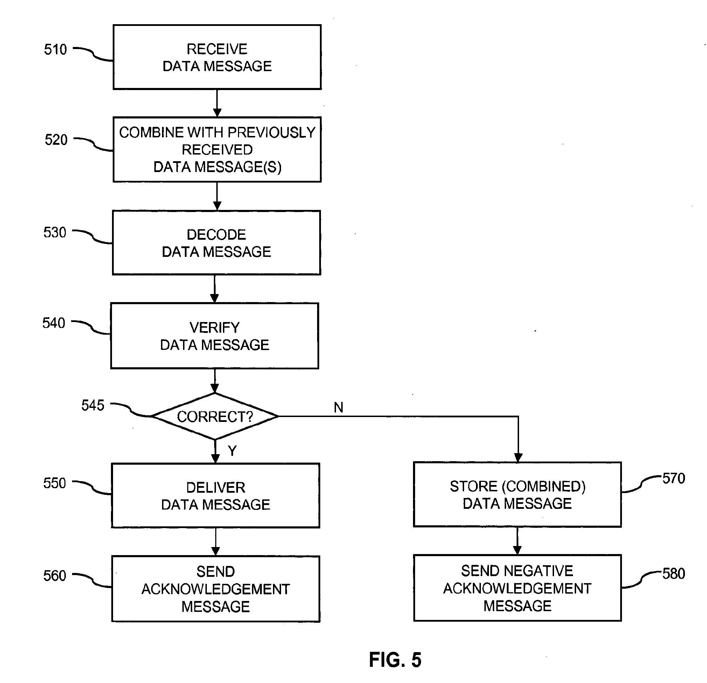

Fig. 5 shows a flowchart for schematically illustrating operation of the CCL RTP in an embodiment of the invention, e.g., when implementing the CCL RTP to correspond to the HARQ protocol specified in 3GPP technical specification 36.321.

At step 510, a data message 23 is received by the CCL RTP receiver. At step 520 the CCL RTP receiver may combine the received data message 23 with one or more previously received data messages 23. These previously received data messages 23 may be stored from previous unsuccessful reception attempts. By combining the data messages in step 520, redundancy is increased and the probability of further unsuccessful reception attempts is reduced. At step 530, the CCL RTP receiver decodes the data message 23, which optionally has been combined with one or more previously received data messages. At step 540, the CCL RTP receiver verifies the decoded data message to determine whether the data message 23 was correctly received or not, e.g., on the basis of a checksum test. As indicated by branch "Y" of step 545, if the data message 23 was correctly received, the process continues with step 550 where CCL RTP receiver delivers the data message 23 to a higher protocol layer, e.g., to the MCCL RTP, and step 560, where the CCL RTP receiver transmits the acknowledgement message 24 to the CCL RTP transmitter. The acknowledgement message 24 will typically cause the CCL RTP transmitter to proceed with transmission of another data message 23.

As indicated by branch "N" of step 545, if the data message 23 was not correctly received, the process continues with step 570 where CCL RTP receiver stores the data message 23, optionally as combined at step 520, and step 580 where the CCL RTP receiver transmits a negative acknowledgement message to the CCL RTP transmitter. The negative acknowledgement message will cause the CCL RTP transmitter to retransmit the data message 23, which may be accomplished using a different encoding.

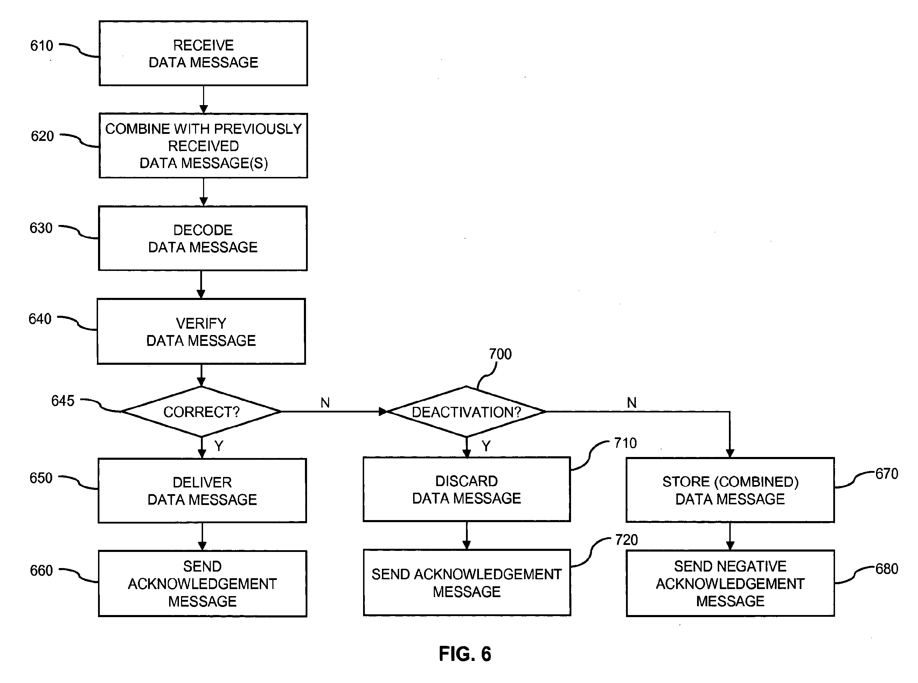

Fig. 6 shows a flowchart for schematically illustrating modified operation of the CCL RTP in the case of implementing step 404 in the process of Fig. 4.

At step 610, a data message 23 is received by the CCL RTP receiver. At step 620 the CCL RTP receiver may combine the received data message 23 with one or more previously received data messages 23. These previously received data messages 23 may be stored from previous unsuccessful reception attempts. By combining the data messages in step 520, redundancy is increased and the probability of further unsuccessful reception attempts is reduced. At step 630, the CCL RTP receiver decodes the data message 23, which optionally has been combined with one or more previously received data messages. At step 640, the CCL RTP receiver verifies the decoded data message to determine whether the data message 23 was correctly received or not, e.g., on the basis of a checksum test. As indicated by branch "Y" of step 645, if the data message 23 was correctly received, the process continues with step 650 where CCL RTP receiver delivers the data message 23 to a higher protocol layer, e.g., to the MCCL RTP, and step 660, where the CCL RTP receiver transmits the acknowledgement message 24 to the CCL RTP transmitter. The acknowledgement message 24 will typically cause the CCL RTP transmitter to proceed with transmission of another data message 23.

As indicated by branch "N" of step 645, if the data message 23 was not correctly received, the process continues with step 700 where CCL RTP receiver checks whether transmission on this component carrier is to be deactivated. If the component carrier is not to be deactivated, as indicated by branch "N" of step 700, the process continues with step 670 where the CCL RTP receiver stores the data message 23, optionally as combined at step 520, and step 680, where the CCL RTP receiver transmits a negative acknowledgement message to the CCL RTP transmitter. The negative acknowledgement message will cause the CCL RTP transmitter to retransmit the data message 23, which may be accomplished using a different encoding.

If the component carrier is to be deactivated, as indicated by branch "Y" of step 700, process continues with step 710 where the CCL RTP receiver discards the data message 23, and step 720, where the CCL RTP receiver transmits an acknowledgement message 24 to the CCL RTP transmitter.

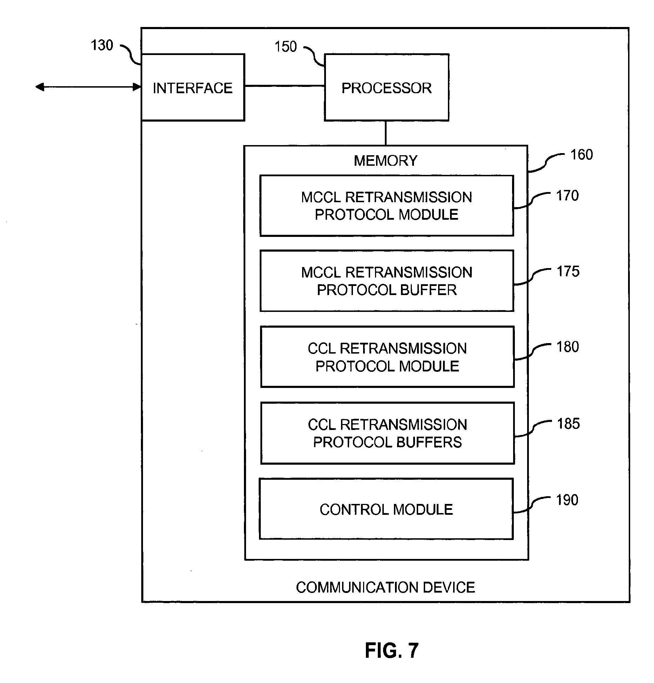

Fig. 7 schematically illustrates an exemplary structure for implementing the above-described concepts in a communication device, e.g., in the access node 100 or in the UE 10 of Fig. 1.

In the illustrated structure, the communication device 100 includes an interface 130 for transmitting and/or receiving one or more of the above-described types of messages, e.g., the data messages 21, the acknowledgement messages 22, the data messages 23, the acknowledgement messages 24, the indication 301, the indication 401, and/or the retransmission trigger message 403. More specifically, when implementing the transmitter 210 in the process of Fig. 3, the interface 130 may be used to receive the indication 301 and to transmit the data messages 21 and 23. When implementing the receiver 220 in the process of Fig. 3, the interface 130 may be used to receive the data messages 21 and 23 and to send the acknowledgement messages 22 and 24. When implementing the transmitter 210 in the process of Fig. 4, the interface 130 further may be used to receive the retransmission trigger message 403. When implementing the receiver 220 in the process of Fig. 4, the interface 130 further may be used to transmit the retransmission trigger message 403. The interface 130 may communicate the messages via a radio link, e.g., the radio link 20 as established between the UE 10 and the access node 100 of Fig. 1. In some embodiments, the communication device 100 may also include a plurality of interfaces for transmitting and/or receiving the above-described types of messages. For example, the indication 301 or the indication 401 could be received on another interface than used for receiving the messages 21, 22, 23, 24 or 403.

Further, the communication device includes a processor 150 coupled to the interface 130 and a memory 160 coupled to the processor 150. The memory 160 may include a read-only memory (ROM), e.g. a flash ROM, a random-access memory (RAM), e.g. a Dynamic RAM (DRAM) or static RAM (SRAM), a mass storage, e.g. a hard disk or solid state disk, or the like. The memory 160 includes suitably configured program code to be executed by the processor 150 so as to implement the above-described functionalities of the communication device 100. More specifically, the memory 160 may include a MCCL RTP module 170 and a MCCL RTP buffer 175 so as to implement functionalities of the MCCL RTP transmitter 212 and/or functionalities of the MCCL RTP receiver 222. Here, it is to be noted that when implementing functionalities of the MCCL RTP receiver 212 only, the MCCL RTP buffer 175 may be omitted. Further, the memory 160 may include a CCL RTP module 180 and CCL RTP buffers 185 so as to implement functionalities of the CCL RTP transmitters 214, 216 and/or functionalities of the CCL RTP receivers 224, 226. Here, it is to be noted that when implementing functionalities of the CCL RTP receivers 224, 226 only, the CCL RTP buffer 175 may be omitted. Further, the memory 160 may include a control module 190. The control module may be used to implement aggregation control functionalities, e.g., the above-described processes for deciding to deactivate transmission on a component carrier and triggering retransmission by the MCCL RTP. The control module 190 may be used to implement the terminal based aggregation controller 11 or the network based aggregation controller 110 as illustrated in Fig. 1.

It is to be understood that the structure as illustrated in Fig. 7 is merely schematic and that the communication device 100 may actually include further components which, for the sake of clarity, have not been illustrated, e.g., further interfaces. Also, it is to be understood that the memory 150 may include further types of program code modules, which have not been illustrated. For example, if the communication device is a UE, the memory 160 may include program code modules for implementing typical functionalities of a UE. Similarly, if the communication device 100 is an access node, the memory 160 may include program code modules for implementing typical functionalities of an access node. Also, it is to be understood that in some embodiments, structures as illustrated in Fig. 7 could be implemented in separate communication devices. For example, the functionalities related to the CCL RTP, e.g., CCL receiver and/or transmitter, could be implemented in an access node and functionalities of the MCCL RTP, e.g., receiver and/or transmitter, could be implemented in a gateway node coupled to the access node. Such a distribution of CCL RTP functionalities and MCCL RTP functionalities to different network nodes may for example be provided in UMTS mobile communication networks. According to some embodiments, also a computer program product may be provided for implementing concepts according to embodiments of the invention, e.g., a computer-readable medium storing the program code and/or other data to be stored in the memory 160.

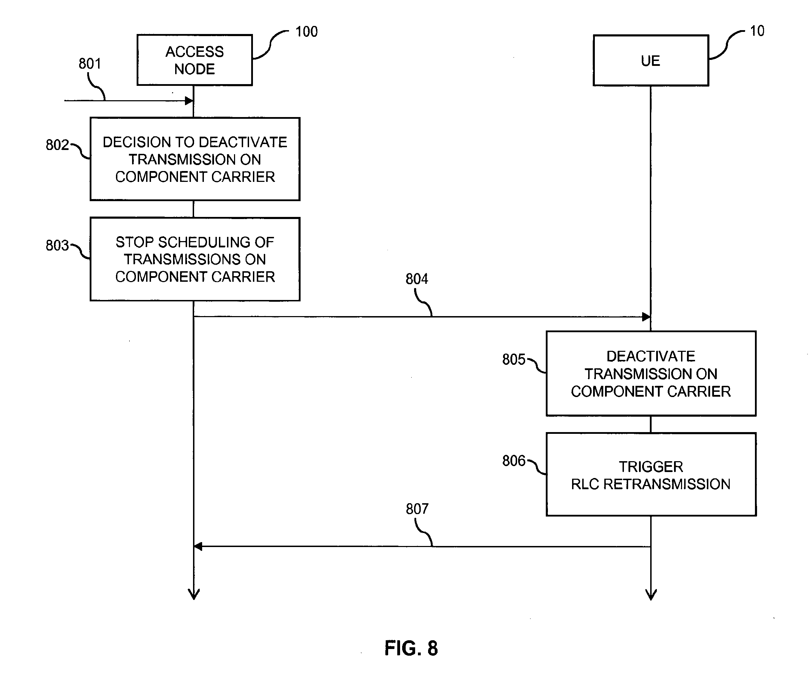

In the following, exemplary scenarios of deactivating an aggregated component carrier in UL or DL communication between the UE 10 and the access node 100 will be explained with reference to Figs. 8 to 15. In these scenarios, it will be assumed that the CCL RTP is the above-mentioned HARQ protocol and the MCCL RTP is the above-mentioned RLC protocol.

Fig. 8 shows a signaling diagram for illustrating a scenario of UL communication from the UE 10 to the access node 100. In the scenario of Fig. 8, the decision of deactivating one of the aggregated component carriers is taken at the access node 100. Accordingly, the UE 10 may be identified with the transmitter 210 of Figs. 2 and 4, and the access node 100 may be identified with the receiver 220 of Figs. 2 and 4. In the UE 10, transmissions of data messages on the basis of the RLC protocol will be handled by a transmitting RLC entity, and transmissions of data messages 23 on the component carriers will be handled by transmitting HARQ entities corresponding to the individual component carriers. In the access node 100, the reception of the data messages 21 is handled by a receiving RLC entity, and the reception of the data messages 23 on the individual component carriers is handled by corresponding receiving HARQ entities.

Initially, the access node 100 receives an indication 801. The indication 801 may include similar information as the indication 401 of Fig. 4. The indication 801 may be received from a UE connected to the access node 100, e.g., from the UE 10, or from a network node connected to the access node 100.

At step 802, the access node 100 locally takes the decision to deactivate transmission on the component carrier. If the indication 801 is a trigger message, the decision taken at step 802 will be to deactivate transmission on the component carrier in response to receiving the indication 801. In some cases, the access node 100 may do further processing of the information in the indication 801, e.g., by combing the information in the indication 801 with other information available at the access node 100. For example, measurement results on the component carrier included in the message 801 could be combined with results of measurements performed by the access node 100 or results of measurements received from one or more other UEs. The decision of step 802 could then be taken on the basis of the combined information.

At step 803, the access node 100 stops scheduling of transmissions on the component carrier. Accordingly, the access node will not allow any new UL transmissions of data messages 21 on the component carrier to be deactivated. However, there may still be ongoing HARQ processes on the component carrier, which may cause UL transmissions of data messages 23 on the component carrier.

In response to the decision to deactivate transmission on the component carrier, the access node 100 triggers the retransmission by the RLC protocol. For this purpose, the access node 100 transmits a retransmission trigger message 804 to the UE 10. The retransmission trigger message 804 may include a message of the RLC protocol, e.g., a status report indicating which data messages 21 have been successfully received by the access node 100.

Alternatively or in addition, the retransmission trigger message 804 may include a message on a MAC protocol layer, which is transmitted from a MAC entity of the access node 100 to a MAC entity of the UE 10, or a message of the HARQ protocol, which is transmitted from a HARQ entity of the access node 100 to a corresponding HARQ entity of the UE 10, to indicate the decision to deactivate transmission on the component carrier. For triggering the retransmission, the HARQ entity in the UE 10 could then transmit a retransmission trigger message to an RLC entity in the UE 10.

At step 805, the UE 10 deactivates transmission on the component carrier. This is accomplished in response to receiving the retransmission trigger message 804. This may involve that the UE 10 stops to send sounding symbols on the component carrier. For example, a physical layer entity corresponding to this component carrier may be controlled to stop sending sounding symbols. Further, this may involve terminating ongoing HARQ processes related to the component carrier, e.g., deleting all data from a retransmission buffer of the HARQ entity.

At step 806, the RLC entity of the UE 10 is triggered to start the retransmission of the data messages 21 for which no acknowledgement message 22 has been received. The retransmission is indicated at 807. The retransmitted data messages 21 are stored in a retransmission buffer of the RLC entity. The retransmission is accomplished on at least one other of the component carriers, i.e., the retransmission does not use the deactivated component carrier. The retransmission will also include the data of terminated HARQ processes related to the deactivated component carrier.

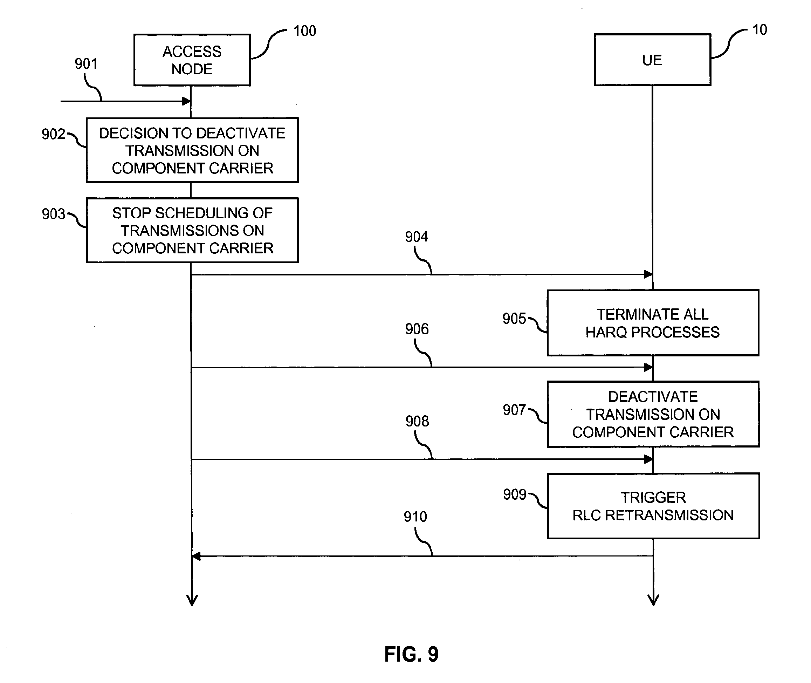

Figs. 9 shows a signaling diagram for illustrating a further scenario of UL communication from the UE 10 to the access node 100. In the scenario of Fig. 9, the decision of deactivating one of the aggregated component carriers is taken at the access node 100. Accordingly, the UE 10 may be identified with the transmitter 210 of Figs. 2 and 4, and the access node 100 may be identified with the receiver 220 of Figs. 2 and 4. In the UE 10, transmissions of data messages on the basis of the RLC protocol will be handled by a transmitting RLC entity, and transmissions of data messages 23 on the component carriers will be handled by transmitting HARQ entities corresponding to the individual component carriers. In the access node 100, the reception of the data messages 21 is handled by a receiving RLC entity, and the reception of the data messages 23 on the individual component carriers is handled by corresponding receiving HARQ entities.

Initially, the access node 100 receives an indication 901. The indication 901 may include similar information as the indication 401 of Fig. 4. The indication 901 may be received from a UE connected to the access node 100, e.g., from the UE 10, or from a network node connected to the access node 100.

At step 902, the access node 100 locally takes the decision to deactivate transmission on the component carrier. If the indication 901 is a trigger message, the decision taken at step 902 will be to deactivate transmission on the component carrier in response to receiving the indication 901. In some cases, the access node 100 may do further processing of the information in the indication 901, e.g., by combing the information in the indication 901 with other information available at the access node 100. For example, measurement results on the component carrier included in the message 901 could be combined with results of measurements performed by the access node 100 or results of measurements received from one or more other UEs. The decision of step 902 could then be taken on the basis of the combined information.

At step 903, the access node 100 stops scheduling of transmissions on the component carrier. Accordingly, the access node will not allow any new UL transmissions of data messages 21 on the component carrier to be deactivated. However, there may still be ongoing HARQ processes on the component carrier, which may cause UL transmissions of data messages 23 on the component carrier.

As indicated at 904, the access node 100 further transmits acknowledgement messages 23 of the HARQ protocol for HARQ processes related to the component carrier to be deactivated. This is done irrespectively of verifying correct receipt of a data message 23 of the HARQ protocol. In this way, termination of ongoing HARQ processes in the UE 10 can be expedited. The termination of the ongoing HARQ processes in the UE 10 is indicated at step 905.

The access node 100 further transmits a message 906 to the UE 10, which causes the UE 10 to deactivate the component carrier. The message 906 may be a message on the MAC protocol layer which is transmitted from a MAC entity of the access node 100 to a MAC entity of the UE 10 to indicate the decision to deactivate transmission on the component carrier. The message 906 may also be a message of the HARQ protocol which us transmitted from a HARQ entity of the access node 100 to the corresponding HARQ entity of the UE 10 to indicate the decision to deactivate transmission on the component carrier.

At step 907, the UE 10 deactivates transmission on the component carrier. This is accomplished in response to receiving the message 906. This may involve that the UE 10 stops to send sounding symbols on the component carrier. For example, a physical layer entity corresponding to this component carrier may be controlled to stop sending sounding symbols.

The access node 100 then triggers the retransmission by the RLC protocol. For this purpose, the access node 100 transmits a retransmission trigger message 908 to the UE 10. The retransmission trigger message 908 may be a message of the RLC protocol, e.g., a status report indicating which data messages 21 have been successfully received by the access node 100.

At step 909, the RLC entity of the UE 10 is triggered to start the retransmission of the data messages 21 for which no acknowledgement message 22 has been received. The retransmission is indicated at 910. The retransmitted data messages 21 are stored in a retransmission buffer of the RLC entity. The retransmission is accomplished on at least one other of the component carriers, i.e., the retransmission does not use the deactivated component carrier. The retransmission will also include the data of terminated HARQ processes related to the deactivated component carrier.

It is to be noted that any of the messages 904, 906 and 908 can be combined and can be jointly transmitted in a common message.

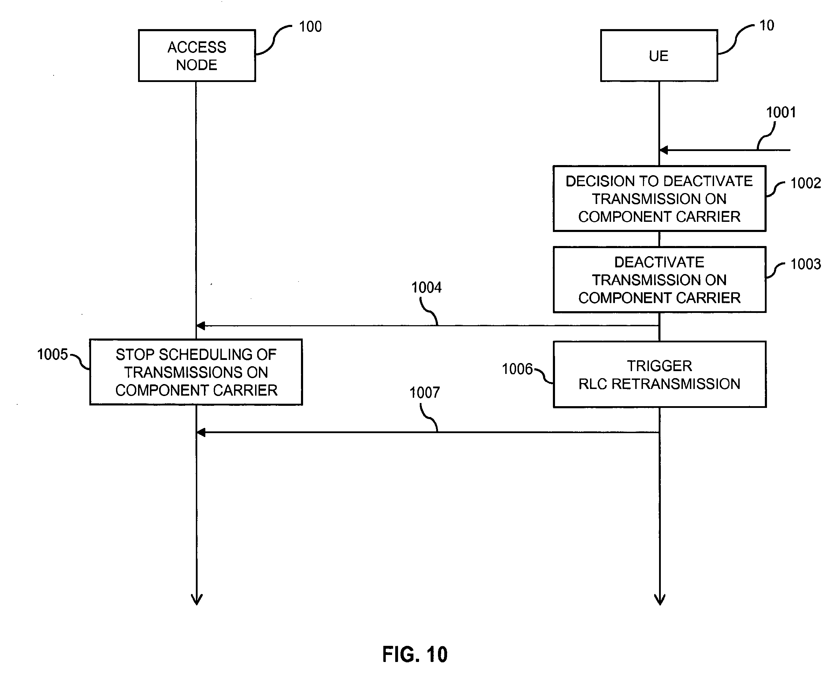

Fig. 10 shows a signaling diagram for illustrating a further scenario of UL communication from the UE 10 to the access node 100. In the scenario of Fig. 10, the decision of deactivating one of the aggregated component carriers is taken at the UE 10. Accordingly, the UE 10 may be identified with the transmitter 210 of Figs. 2 and 3, and the access node 100 may be identified with the receiver 220 of Figs. 2 and 3. In the UE 10, transmissions of data messages on the basis of the RLC protocol will be handled by a transmitting RLC entity, and transmissions of data messages 23 on the component carriers will be handled by transmitting HARQ entities corresponding to the individual component carriers. In the access node 100, the reception of the data messages 21 is handled by a receiving RLC entity, and the reception of the data messages 23 on the individual component carriers is handled by corresponding receiving HARQ entities.

Initially, the UE 10 receives an indication 1001. The indication 1001 may include similar information as the indication 301 of Fig. 3. The indication 1001 may be received from the access node 100. The indication 1001 may also be a signal received from another source, e.g., a signal generated by a primary user of the component carrier.

At step 1002, the UE 10 locally takes the decision to deactivate transmission on the component carrier. If the indication 1001 is a trigger message, the decision taken at step 1002 will be to deactivate transmission on the component carrier in response to receiving the indication 1001. In some cases, the UE 10 may do further processing of the information in the indication 1001, e.g., by combing the information in the indication 1001 with other information available at the UE 10. For example, measurement results on the component carrier included in the message 1001 could be combined with results of measurements performed by the UE 10. The decision of step 1002 could then be taken on the basis of the combined information.

At step 1003, the UE 10 deactivates transmission on the component carrier. This may involve that the UE 10 stops to send sounding symbols on the component carrier. For example, a physical layer entity corresponding to this component carrier may be controlled to stop sending sounding symbols. Further, this may involve terminating ongoing HARQ processes related to the component carrier, e.g., deleting all data from a retransmission buffer of the HARQ entity.

The UE 10 indicates the deactivation of the component carrier to the access node 100. This is accomplished by sending a message 1004 to the access node 100. The message 1004 may be a message transmitted on the component carrier before its deactivation, e.g., a message on the MAC protocol layer or a message of the HARQ protocol, or may be a message of the RLC protocol transmitted on one or more other component carriers. At the access node 100, the message 1004 may be interpreted as an indication to deactivate the component carrier and be handled, e.g., as explained for the processes of Figs. 8 and 9.

At step 1005, the access node 100 stops scheduling of transmissions on the component carrier. Accordingly, the access node will not allow any new UL transmissions of data messages 21 on the component carrier to be deactivated.

At step 1006, the RLC entity of the UE 10 is triggered to start the retransmission of the data messages 21 for which no acknowledgement message 22 has been received. The retransmission is indicated at 1007. The retransmitted data messages 21 are stored in a retransmission buffer of the RLC entity. The retransmission is accomplished on at least one other of the component carriers, i.e., the retransmission does not use the deactivated component carrier. The retransmission will also include the data of terminated HARQ processes related to the deactivated component carrier.

It is to be noted that message 1004 can be included in message 1007, in which case the step 1005 will take place after receiving the combined messages 1004 and 1007.

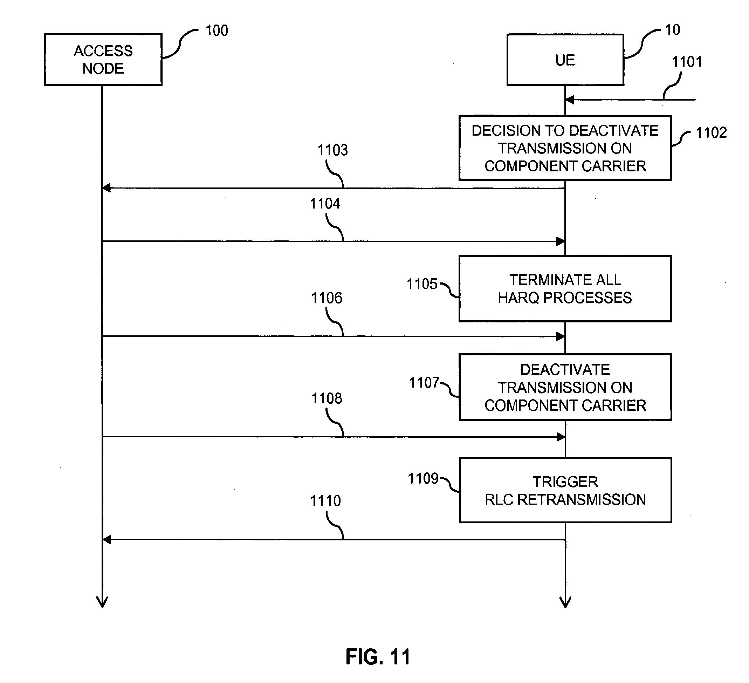

Figs. 11 shows a signaling diagram for illustrating a further scenario of UL communication from the UE 10 to the access node 100. In the scenario of Fig. 11, the decision of deactivating one of the aggregated component carriers is taken at the UE 10. Accordingly, the UE 10 may be identified with the transmitter 210 of Figs. 2 and 3, and the access node 100 may be identified with the receiver 220 of Figs. 2 and 3. In the UE 10, transmissions of data messages on the basis of the RLC protocol will be handled by a transmitting RLC entity, and transmissions of data messages 23 on the component carriers will be handled by transmitting HARQ entities corresponding to the individual component carriers. In the access node 100, the reception of the data messages 21 is handled by a receiving RLC entity, and the reception of the data messages 23 on the individual component carriers is handled by corresponding receiving HARQ entities.

Initially, the UE 10 receives an indication 1101. The indication 1101 may include similar information as the indication 301 of Fig. 3. The indication 1101 may also be a signal received from another source, e.g., a signal generated by a primary user of the component carrier.

At step 1102, the UE 10 locally takes the decision to deactivate transmission on the component carrier. If the indication 1101 is a trigger message, the decision taken at step 1102 will be to deactivate transmission on the component carrier in response to receiving the indication 1101. In some cases, the UE 10 may do further processing of the information in the indication 1101, e.g., by combing the information in the indication 1101 with other information available at the UE 10. For example, measurement results on the component carrier included in the message 1101 could be combined with results of measurements performed by the UE 10. The decision of step 1102 could then be taken on the basis of the combined information.

The UE 10 indicates the decision to deactivate the component carrier to the access node 100. This is accomplished by sending a message 1103 to the access node 100. The message 1103 may be a message transmitted on the component carrier before its deactivation, e.g., a message on the MAC protocol layer or a message of the HARQ protocol, or may be a message of the RLC protocol transmitted on one or more other component carriers. At the access node 100, the message 1103 may be interpreted as an indication to deactivate the component carrier and be handled, e.g., as explained for the processes of Figs. 8 and 9.

As indicated at 1104, the access node 100 then transmits acknowledgement messages 23 of the HARQ protocol for HARQ processes related to the component carrier to be deactivated. This is done irrespectively of verifying correct receipt of a data message 23 of the HARQ protocol. In this way, termination of ongoing HARQ processes in the UE 10 can be expedited. The termination of the ongoing HARQ processes in the UE 10 is indicated at step 1105.

The access node 100 further transmits a message 1106 to the UE 10, which causes the UE 10 to deactivate the component carrier. The message 1106 may be a message on the MAC protocol layer, which is transmitted from a MAC entity of the access node 100 to a MAC entity of the UE 10. The message 1106 may also be a message of HARQ protocol, which is transmitted from a HARQ entity of the access node 100 to a corresponding HARQ entity of the UE 10.

At step 1107, the UE 10 deactivates transmission on the component carrier. This is accomplished in response to receiving the message 1106. This may involve that the UE 10 stops to send sounding symbols on the component carrier. For example, a physical layer entity corresponding to this component carrier may be controlled to stop sending sounding symbols.

The access node 100 then triggers the retransmission by the RLC protocol. For this purpose, the access node 100 transmits a retransmission trigger message 1108 to the UE 10. The retransmission trigger message 1108 may be a message of the RLC protocol, e.g., a status report indicating which data messages 21 have been successfully received by the access node 100.

At step 1109, the RLC entity of the UE 10 is triggered to start the retransmission of the data messages 21 for which no acknowledgement message 22 has been received. The retransmission is indicated at 1110. The retransmitted data messages 21 are stored in a retransmission buffer of the RLC entity. The retransmission is accomplished on at least one other of the component carriers, i.e., the retransmission does not use the deactivated component carrier. The retransmission will also include the data of terminated HARQ processes related to the deactivated component carrier.

It is to be noted that any of the messages 1104, 1106 and 1108 can be combined and can be jointly transmitted in a common message.

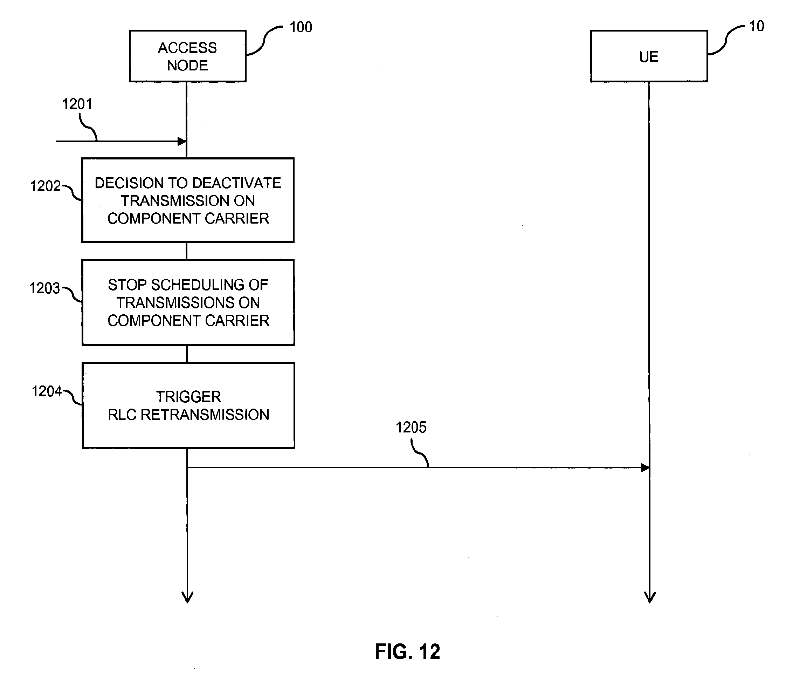

Fig. 12 shows a signaling diagram for illustrating a scenario of DL communication from the access node 100 to the UE 10. In the scenario of Fig. 12, the decision of deactivating one of the aggregated component carriers is taken at the access node 100. Accordingly, the UE 10 may be identified with the receiver 220 of Figs. 2 and 3, and the access node 100 may be identified with the transmitter 210 of Figs. 2 and 3. In the access node 100, transmissions of data messages on the basis of the RLC protocol will be handled by a transmitting RLC entity, and transmissions of data messages 23 on the component carriers will be handled by transmitting HARQ entities corresponding to the individual component carriers. In the UE 10, the reception of the data messages 21 is handled by a receiving RLC entity, and the reception of the data messages 23 on the individual component carriers is handled by corresponding receiving HARQ entities.

Initially, the access node 100 receives an indication 1201. The indication 1201 may include similar information as the indication 301 of Fig. 3. The indication 1201 may be received from a UE connected to the access node 100, e.g., from the UE 10, or from a network node connected to the access node 100.

At step 1202, the access node 100 locally takes the decision to deactivate transmission on the component carrier. If the indication 1201 is a trigger message, the decision taken at step 1202 will be to deactivate transmission on the component carrier in response to receiving the indication 1201. In some cases, the access node 100 may do further processing of the information in the indication 1201, e.g., by combing the information in the indication 1201 with other information available at the access node 100. For example, measurement results on the component carrier included in the message 1201 could be combined with results of measurements performed by the access node 100 or results of measurements received from one or more other UEs. The decision of step 1202 could then be taken on the basis of the combined information.

At step 1203, the access node 100 stops scheduling of transmissions on the component carrier. Accordingly, the access node will not allow any new DL transmissions of data messages 21 on the component carrier to be deactivated. However, there may still be ongoing HARQ processes on the component carrier, which may cause DL transmissions of data messages 23 on the component carrier. At step 1203, the access node 100 may also deactivate transmission on the component carrier. This may involve controlling the HARQ entity corresponding to this component carrier to stop transmitting on the component carrier. Further, this may involve terminating ongoing HARQ processes related to the component carrier, e.g., deleting all data from a retransmission buffer of the HARQ entity.

At step 1204, the RLC entity of the access node 100 is triggered to start the retransmission of the data messages 21 for which no acknowledgement message 22 has been received. The retransmission is indicated at 1205. The retransmitted data messages 21 are stored in a retransmission buffer of the RLC entity. The retransmission is accomplished on at least one other of the component carriers, i.e., the retransmission does not use the deactivated component carrier. The retransmission will also include the data of terminated HARQ processes related to the deactivated component carrier.

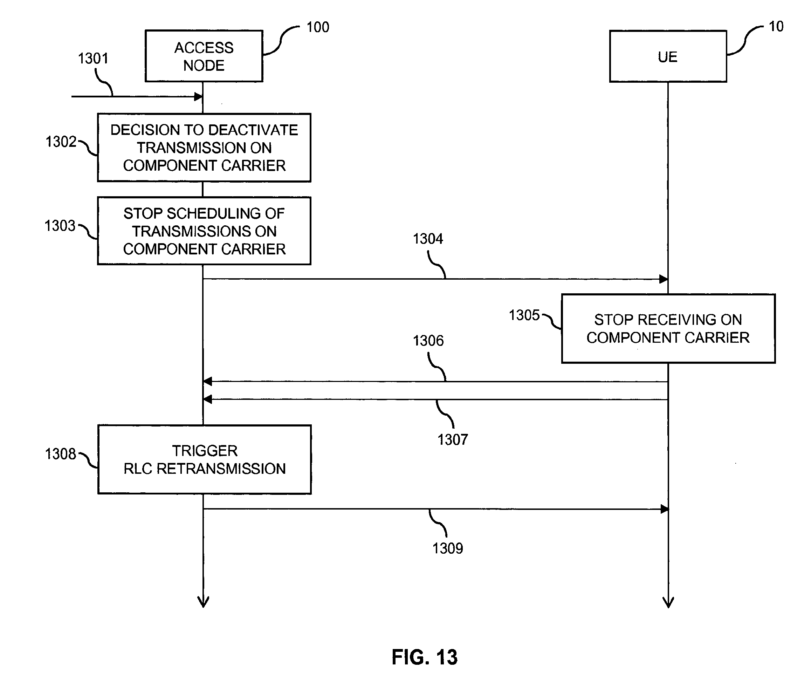

Fig. 13 shows a signaling diagram for illustrating a further scenario of DL communication from the access node 100 to the UE 10. In the scenario of Fig. 13, the decision of deactivating one of the aggregated component carriers is taken at the access node 100. Accordingly, the UE 10 may be identified with the receiver 220 of Figs. 2 and 3, and the access node 100 may be identified with the transmitter 210 of Figs. 2 and 3. In the access node 100, transmissions of data messages 21 on the basis of the RLC protocol will be handled by a transmitting RLC entity, and transmissions of data messages 23 on the component carriers will be handled by transmitting HARQ entities corresponding to the individual component carriers. In the UE 10, the reception of the data messages 21 is handled by a receiving RLC entity, and the reception of the data messages 23 on the individual component carriers is handled by corresponding receiving HARQ entities.

Initially, the access node 100 receives an indication 1301. The indication 1301 may include similar information as the indication 301 of Fig. 3. The indication 1301 may be received from a UE connected to the access node 100, e.g., from the UE 10, or from a network node connected to the access node 100.

At step 1302, the access node 100 locally takes the decision to deactivate transmission on the component carrier. If the indication 301 is a trigger message, the decision taken at step 1302 will be to deactivate transmission on the component carrier in response to receiving the indication 1301. In some cases, the access node 100 may do further processing of the information in the indication 1301, e.g., by combing the information in the indication 1201 with other information available at the access node 100. For example, measurement results on the component carrier included in the message 1301 could be combined with results of measurements performed by the access node 100 or results of measurements received from one or more other UEs. The decision of step 1302 could then be taken on the basis of the combined information.

At step 1303, the access node 100 stops scheduling of transmissions on the component carrier. Accordingly, the access node will not allow any new DL transmissions of data messages 21 on the component carrier to be deactivated. However, there may still be ongoing HARQ processes on the component carrier, which may cause DL transmissions of data messages 23 on the component carrier.

The access node 100 indicates the decision to deactivate the component carrier to the UE 10. This is accomplished by sending a message 1304 to the UE 10. The message 1304 may be a message transmitted on the component carrier before its deactivation, e.g., a message on the MAC protocol layer or a message of the HARQ protocol, or may be a message of the RLC protocol transmitted on one or more other component carriers.

In response to receiving the message 1304, the UE 10 stops receiving on the component carrier. This may involve stopping to listen for data messages 23 of the HARQ protocol and/or stopping to perform measurements with respect to the component carrier.

As indicated at 1306, the UE 10 may further transmit acknowledgement messages 23 of the HARQ protocol for HARQ processes related to the component carrier to be deactivated. This is done irrespectively of verifying correct receipt of a data message 23 of the HARQ protocol. In this way, termination of ongoing HARQ processes in the access node 100 can be expedited. After terminating the HARQ processes, the access node 100 may deactivate transmission on the component carrier. This may involve controlling the HARQ entity corresponding to this component carrier to stop transmitting on the component carrier.

The UE 10 then triggers the retransmission by the RLC protocol. For this purpose, the UE 10 transmits a retransmission trigger message 1307 to the access node 100. The retransmission trigger message 1307 may be a message of the RLC protocol, e.g., a status report indicating which data messages 21 have been successfully received by the UE 10.

At step 1308, the RLC entity of the access node 100 is triggered to start the retransmission of the data messages 21 for which no acknowledgement message 22 has been received. This is accomplished in response to receiving the retransmission trigger message 1307. The retransmission is indicated at 1309. The retransmitted data messages 21 are stored in a retransmission buffer of the RLC entity. The retransmission is accomplished on at least one other of the component carriers, i.e., the retransmission does not use the deactivated component carrier. The retransmission will also include the data of terminated HARQ processes related to the deactivated component carrier.

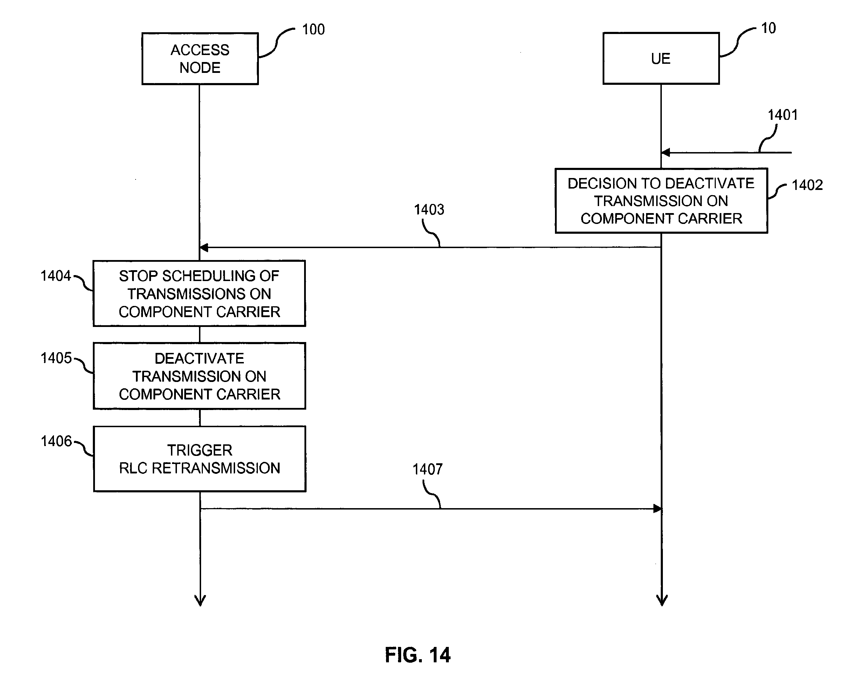

Fig. 14 shows a signaling diagram for illustrating a further scenario of DL communication from the access node 100 to the UE 10. In the scenario of Fig. 14, the decision of deactivating one of the aggregated component carriers is taken at the UE 10. Accordingly, the UE 10 may be identified with the receiver 220 of Figs. 2 and 4, and the access node 100 may be identified with the transmitter 210 of Figs. 2 and 4. In the access node 100, transmissions of data messages 21 on the basis of the RLC protocol will be handled by a transmitting RLC entity, and transmissions of data messages 23 on the component carriers will be handled by transmitting HARQ entities corresponding to the individual component carriers. In the UE 10, the reception of the data messages 21 is handled by a receiving RLC entity, and the reception of the data messages 23 on the individual component carriers is handled by corresponding receiving HARQ entities.

Initially, the UE 10 receives an indication 1401. The indication 1401 may include similar information as the indication 401 of Fig. 4. The indication 1401 may also be a signal received from another source, e.g., a signal generated by a primary user of the component carrier.

At step 1402, the UE 10 locally takes the decision to deactivate transmission on the component carrier. If the indication 1401 is a trigger message, the decision taken at step 1402 will be to deactivate transmission on the component carrier in response to receiving the indication 1401. In some cases, the UE 10 may do further processing of the information in the indication 1401, e.g., by combing the information in the indication 1401 with other information available at the UE 10. For example, measurement results on the component carrier included in the message 1401 could be combined with results of measurements performed by the UE 10. The decision of step 1402 could then be taken on the basis of the combined information.

The UE 10 indicates the decision to deactivate the component carrier to the access node 100. This is accomplished by sending a message 1403 to the access node 100. The message 1403 may be a message transmitted on the component carrier before its deactivation, e.g., a message on the MAC protocol layer or a message of the HARQ protocol, or may be a message of the RLC protocol transmitted on one or more other component carriers.

In response to receiving the message 1403, the access node 100 stops scheduling of transmissions on the component carrier at step 1404. Accordingly, the access node will not allow any new DL transmissions of data messages 21 on the component carrier to be deactivated. However, there may still be ongoing HARQ processes on the component carrier, which may cause DL transmissions of data messages 23 on the component carrier.

At step 1405, the access node 100 deactivates transmission on the component carrier. This may involve controlling the HARQ entity corresponding to this component carrier to stop transmitting on the component carrier. Further, this may involve terminating ongoing HARQ processes related to the component carrier, e.g., deleting all data from a retransmission buffer of the HARQ entity.

At step 1406, the RLC entity of the access node 100 is triggered to start the retransmission of the data messages 21 for which no acknowledgement message 22 has been received. The retransmission is indicated at 1407. The retransmitted data messages 21 are stored in a retransmission buffer of the RLC entity. The retransmission is accomplished on at least one other of the component carriers, i.e., the retransmission does not use the deactivated component carrier. The retransmission will also include the data of terminated HARQ processes related to the deactivated component carrier.

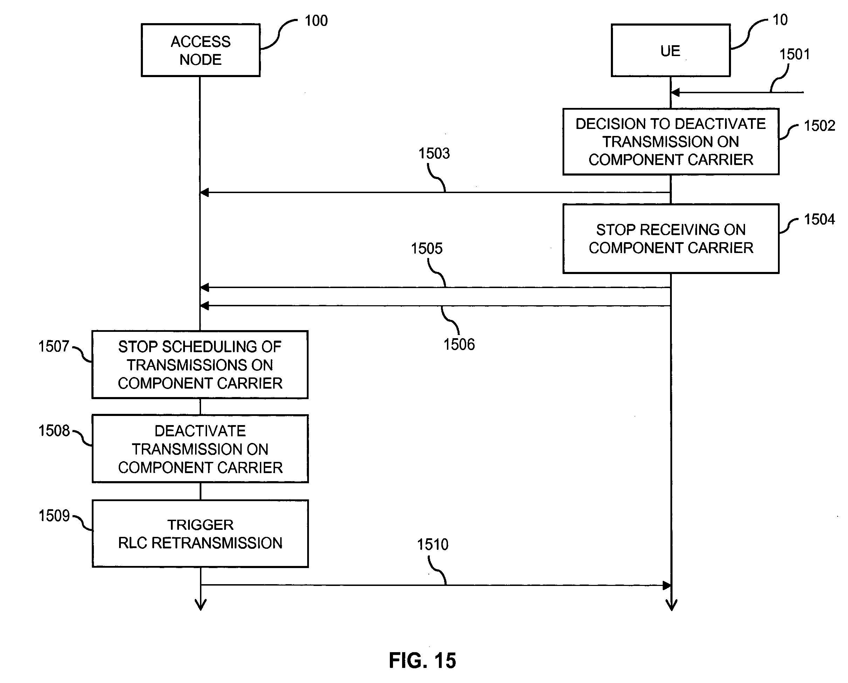

Fig. 15 shows a signaling diagram for illustrating a further scenario of DL communication from the access node 100 to the UE 10. In the scenario of Fig. 15, the decision of deactivating one of the aggregated component carriers is taken at the UE 10. Accordingly, the UE 10 may be identified with the receiver 220 of Figs. 2 and 4, and the access node 100 may be identified with the transmitter 210 of Figs. 2 and 4. In the access node 100, transmissions of data messages 21 on the basis of the RLC protocol will be handled by a transmitting RLC entity, and transmissions of data messages 23 on the component carriers will be handled by transmitting HARQ entities corresponding to the individual component carriers. In the UE 10, the reception of the data messages 21 is handled by a receiving RLC entity, and the reception of the data messages 23 on the individual component carriers is handled by corresponding receiving HARQ entities.

Initially, the UE 10 receives an indication 1501. The indication 1501 may include similar information as the indication 401 of Fig. 4. The indication 1501 may also be a signal received from another source, e.g., a signal generated by a primary user of the component carrier.

At step 1502, the UE 10 locally takes the decision to deactivate transmission on the component carrier. If the indication 1501 is a trigger message, the decision taken at step 1502 will be to deactivate transmission on the component carrier in response to receiving the indication 1501. In some cases, the UE 10 may do further processing of the information in the indication 1501, e.g., by combing the information in the indication 1501 with other information available at the UE 10. For example, measurement results on the component carrier included in the message 1501 could be combined with results of measurements performed by the UE 10. The decision of step 1502 could then be taken on the basis of the combined information.

The UE 10 indicates the decision to deactivate the component carrier to the access node 100. This is accomplished by sending a message 1503 to the access node 100. The message 1503 may be a message transmitted on the component carrier before its deactivation, e.g., a message on the MAC protocol layer or a messages of the HARQ protocol, or may be a message of the RLC protocol transmitted on one or more other component carriers.

In response to the decision to deactivate transmission on the component carrier, the UE 10 stops receiving on the component carrier at step 1504. This may involve stopping to listen for data messages 23 of the HARQ protocol and/or stopping to perform measurements with respect to the component carrier.

As indicated at 1505, the UE 10 may further transmit acknowledgement messages 23 of the HARQ protocol for HARQ processes related to the component carrier to be deactivated. This is done irrespectively of verifying correct receipt of a data message 23 of the HARQ protocol. In this way, termination of ongoing HARQ processes in the access node 100 can be expedited.

The UE 10 then triggers the retransmission by the RLC protocol. For this purpose, the UE 10 transmits a retransmission trigger message 1506 to the access node 100. The retransmission trigger message 1506 may be a message of the RLC protocol, e.g., a status report indicating which data messages 21 have been successfully received by the UE 10.

In response to receiving the message 1506, the access node 100 stops scheduling of transmissions on the component carrier at step 1507 Accordingly, the access node 100 will not allow any new DL transmissions of data messages 21 on the component carrier to be deactivated. However, there may still be ongoing HARQ processes on the component carrier, which may cause DL transmissions of data messages 23 on the component carrier.

At step 1508, the access node 100 deactivates transmission on the component carrier. This may involve controlling the HARQ entity corresponding to this component carrier to stop transmitting on the component carrier.

At step 1509, the RLC entity of the access node 100 is triggered to start the retransmission of the data messages 21 for which no acknowledgement message 22 has been received. This is accomplished in response to receiving the retransmission trigger message 1506. The retransmission is indicated at 1510. The retransmitted data messages 21 are stored in a retransmission buffer of the RLC entity. The retransmission is accomplished on at least one other of the component carriers, i.e., the retransmission does not use the deactivated component carrier. The retransmission will also include the data of terminated HARQ processes related to the deactivated component carrier.

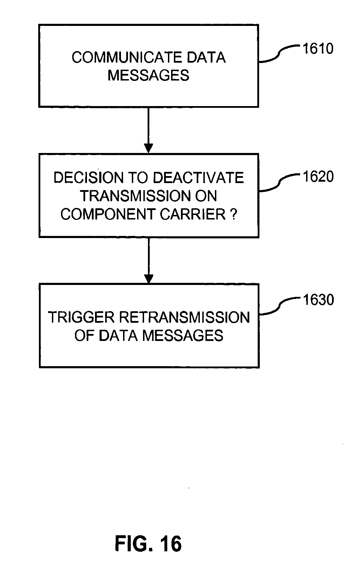

Fig. 16 shows a flowchart for schematically illustrating a method according to an embodiment of the invention. The method may be used for implementing the above-described processes of controlling carrier aggregation. These processes may be based on the concepts processes and structures as explained in connection with Figs. 1-15. The method may be implemented in a communication device, e.g., in a mobile terminal such as the UE 10 of Fig. 1 or in a radio access node such as the access node 100 of Fig. 1, or in a communication system, e.g., a communication system including the access node 100 and the UE 10 of Fig. 1.

At step 1610, data messages are communicated, i.e., transmitted or received. For example, the data messages may be transmitted by one communication device and received by another communication device. In a DL communication scenario, the data messages could be transmitted by an access node, e.g., the access node 100 of Fig. 1, and received by a UE, e.g., the UE 10 of Fig. 1. In a UL communication scenario, the data messages could be transmitted by a UE, e.g., the UE 10 of Fig. 1, and received by an access node, e.g., the access node 100 of Fig. 1. The data messages are communicated on multiple component carriers, e.g., the component carriers 32, 42, 52 as explained in connection with Fig. 1. The component carriers may be selected from different spectra, e.g., from the spectrum 30 and one or more of the spectra 40, 50 as explained in connection with Fig. 1. For example, one or more component carriers could be selected from a spectrum assigned to a radio access technology, e.g., 3GPP LTE, and one or more further component carriers could be selected from another spectrum not assigned to this radio access technology. In some embodiments, the component carriers may also be selected from spectra assigned to the same radio access technology, but to different network operators. In some embodiments, the component carriers could also be selected from only one spectrum, e.g., the spectrum 30 only.

The communication of the data messages on the multiple component carriers is accomplished on the basis of a retransmission protocol, e.g., the MCCL RTP as explained in connection with Fig. 2. Accordingly, the data messages may be the data messages 21 as explained in connection with Fig. 2. The retransmission protocol requires sending of an acknowledgement message in response to verifying correct receipt of a data message, e.g., the acknowledgement message 22 as explained in connection with Fig. 2. In some embodiments, the retransmission protocol may also provide sending of a negative acknowledgement message in response to detecting incorrect reception of a data message.

On each of the component carriers, transmissions of data messages may be accomplished on the basis of a further retransmission protocol, e.g., the CCL RTP as explained in connection with Fig. 2. The further retransmission protocol requires sending of an acknowledgment message in response to verifying correct receipt of a data message on the component carrier. Typically, the acknowledgement message will be transmitted on the component carrier as well. In some embodiments, the further retransmission protocol may also provide sending of a negative acknowledgement message in response to detecting incorrect reception of a data message on the component carrier, e.g., as explained in connection with Fig. 5 or 6. The further retransmission protocol may have a feedback time which is shorter than a feedback time of the retransmission protocol.

At step 1620, it is determined whether there is a decision to deactivate transmission on one of the component carriers. For example, one or more component carriers could be selected from a spectrum assigned to a radio access technology, e.g., 3GPP LTE, and one or more further component carriers could be selected from another spectrum not assigned to this radio access technology, and the component carrier to be deactivated could be from the latter spectrum. The decision to deactivate may be taken by the communication device transmitting the data messages, the communication device receiving the data messages, or by another entity. For this purpose, a controller may be provided in the communication device, e.g., the aggregation controller 11 or 110 as illustrated in Fig. 1. The communication device transmitting the data messages and/or the communication device receiving the data messages may be notified of the decision by receiving an indication. In some embodiments, the communication device transmitting the data messages and/or the communication device receiving the data messages may locally take the decision, e.g., on the basis of received information and/or on the basis of locally performed measurements.

At step 1630, in response to the decision to deactivate the transmission on the component carrier, the retransmission protocol is triggered to retransmit those data messages for which no acknowledgement message has been received. This may be accomplished by sending a retransmission trigger message. If the method is implemented in a receiver and comprises receiving of the data messages, the retransmission trigger message may be transmitted from the receiver to the transmitter of the data messages. If the method is implemented in a transmitter and comprises transmitting of the data messages to a receiver, the method may further comprise the retransmission by the retransmission protocol, which takes places from the transmitter to the receiver. In some embodiments, a retransmission trigger message may also be transmitted between different entities of the same communication device, e.g., from an transmitting entity of the further retransmission protocol to a transmitting entity of the retransmission protocol. For controlling the triggering of the retransmission, the communication device may be provided with a controller, e.g., the aggregation controller 11 or 110 as illustrated in Fig. 1. The retransmission of the data messages is accomplished on one or more of the other component carriers, i.e., on one or more of the component carriers for which the decision to deactivate has not been taken. The component carrier to be deactivated is not used in the retransmission. Since the retransmission is triggered already by the decision to deactivate the component carrier, i.e., before data losses due to actual deactivation of the component carrier may cause a retransmission, the data traffic on the component carrier can be quickly redirected to the other component carriers.

In some embodiments, if the transmissions of data messages on each of the component carriers are accomplished on the basis of the further retransmission protocol, triggering the retransmission may be accompanied by sending acknowledgement messages of the further retransmission protocol irrespectively of verifying correct receipt of a data message of the further retransmission protocol, e.g., as shown in the process of Fig. 6. In this way, termination of ongoing processes of the further retransmission protocol may be expedited. As an alternative or in addition, ongoing processes of the further retransmission protocol on the component carrier to be deactivated may also be terminated actively, e.g., by deleting a retransmission buffer of the further retransmission protocol. In each case, it is possible to deactivate transmission on the component carrier without triggering retransmissions of the further retransmission protocol.

In some embodiments, a computer program product may be provided, which comprises program code to be executed by a processor of a communication device, thereby causing the communication device to operate according to the method as explained in connection with Fig. 16.

As can be seen, by using the above described concepts, deactivation of one or more aggregated component carriers can be controlled in an efficient manner. In particular, the concepts can be used to quickly vacate a component carrier without causing data losses or undue delays by retransmission of data messages.

It is to be understood that the examples and embodiments as explained above are merely illustrative and susceptible to various modifications. For example, the concepts could be used in other types of mobile communication network using carrier aggregation. Also, the concepts may be applied to any number of different spectra from which the component carriers can be selected. Also, it is to be understood that the concepts may be applied in connection with various types of retransmission protocols. Further, it is to be understood that the above concepts may be implemented by using correspondingly designed software in existing network devices or UEs, or by using dedicated hardware in the network devices or UEs.

## Claims

1. A method of controlling component carrier aggregation, comprising:
communication of data messages (21) on multiple component carriers (32, 42, 52), said communication being accomplished on the basis of a retransmission protocol requiring sending of an acknowledgement message (22) in response to verifying correct receipt of a data message of said data messages (21), and
in response to a decision to deactivate transmission on one of the component carriers (32, 42, 52), triggering the retransmission protocol to retransmit those data messages (21), for which no acknowledgement message (22) of the retransmission protocol has been received, said retransmission being accomplished on at least one other of the component carriers (32, 42, 52).

2. The method according to claim 1,
wherein transmission on each of the component carriers (32, 42, 52) is accomplished on the basis of a further retransmission protocol requiring sending of an acknowledgement message (24) in response to verifying correct receipt of a data message (23) on the respective component carrier (32, 42, 52).

3. The method according to claim 2, comprising:
in response to the decision to deactivate transmission on the component carrier (32, 42, 52), deactivating transmission on the component carrier (32, 42, 52) without retransmission of data messages (23) by the further retransmission protocol.

4. The method according to claim 2 or 3, comprising:
in response to the decision to deactivate transmission on the component carrier (32, 42, 52), sending an acknowledgement message (24) of the further retransmission protocol irrespective of verifying correct receipt of a data message (23) on the component carrier (32, 42, 52).

5. The method according to any one of claims 2 to 4,
wherein a feedback time of the further retransmission protocol is shorter than a feedback time of the retransmission protocol.

6. The method according to any one of the preceding claims, comprising:
receiving an indication (301; 401; 403; 801, 804; 901, 908; 1001; 1101, 1108; 1201; 1301, 1307; 1401, 1403; 1501, 1506) of the decision to deactivate transmission on the component carrier (32, 42, 52).

7. The method according to any one of the preceding claims, comprising:
taking the decision to deactivate transmission on the component carrier (32, 42, 52).

8. The method according to claim 6 or 7,
wherein said communication of the data messages (21) comprises receiving the data messages from a transmitter (210), and
wherein the method comprises sending a retransmission trigger message (403; 804; 908; 1108; 1307; 1403; 1506) to the transmitter (210) to trigger said retransmission by the retransmission protocol.

9. The method according to any one of claims 6 to 8,
wherein said communication of the data messages (21) comprises transmitting the data messages to a receiver (220), and
wherein the method comprises said retransmission by the retransmission protocol.

10. The method according to any one of the preceding claims,
wherein the at least one other component carrier (32, 42, 52) is from a spectrum assigned to a radio access technology and the deactivated component carrier (32, 42, 52) is from a spectrum not assigned to this radio access technology.

11. A communication device, comprising
an interface (130) configured to communicate data messages (21) on multiple component carriers (32, 42, 52), said communication being accomplished on the basis of a retransmission protocol requiring sending of an acknowledgement message (22) in response to verifying correct receipt of a data message of said data messages (21), and
a controller (11, 110) configured to trigger, in response to a decision to deactivate transmission on one of the component carriers (32, 42, 52), the retransmission protocol to retransmit those data messages (21), for which no acknowledgement message (22) of the retransmission protocol has been received, on at least one other of the component carriers (32, 42, 52).

12. The communication device according to claim 11,
wherein the communication device is a radio access node (100).

13. The communication device according to claim 11,
wherein the communication device is a mobile terminal (10).

14. The receiver according to any one of claims 11 to 13,
wherein the communication device is configured to operate in accordance with the method according to any one of claims 1 to 10.

15. A communication system, comprising:
a transmitter (210) comprising a transmitting entity (212) configured to transmit data messages (21) on multiple component carriers, said transmission being accomplished on the basis of a retransmission protocol requiring sending of an acknowledgement message (22) in response to verifying correct receipt of a data message of said data messages (21), and
a receiver (220) comprising a receiving entity (222) configured to receive the data messages (21) on the basis of the retransmission protocol,
wherein at least one of the transmitter (210) and the receiver (220) comprises a controller (11, 110) configured to trigger, in response to a decision to deactivate transmission on one of the component carriers, the retransmission protocol to retransmit those data messages (21) for which no acknowledgement message (22) of the retransmission protocol has been received, said retransmission being accomplished on at least one other of the component carriers.

16. The communication system according to claim 15,
wherein the communication system is configured to operate in accordance with the method according to any one of claims 1 to 10.

17. A computer program product comprising program code to be executed by a processor (150) of a communication device, thereby causing the radio communication device to operate according to a method as defined in any one of claims 1 to 10.

## Patentansprüche

1. Verfahren zur Steuerung von Komponententrägeraggregation, umfassend:
Kommunizieren von Datennachrichten (21) auf mehreren Komponententrägern (32, 42, 52), wobei die Kommunikation auf der Basis eines Wiederholungssendungsprotokolls durchgeführt wird, das ein Senden einer Bestätigungsnachricht (22) in Reaktion auf ein Verifizieren des korrekten Empfangs einer Datennachricht der Datennachrichten (21) erfordert, und
Auslösen in Reaktion auf eine Entscheidung, Übertragung auf einem der Komponententräger (32, 42, 52) zu deaktivieren, des Wiederholungssendungsprotokolls, um jene Datennachrichten (21), für welche keine Bestätigungsnachricht (22) des Wiederholungssendungsprotokolls empfangen wurde, erneut zu senden, wobei die Wiederholungssendung auf mindestens einem anderen der Komponententräger (32, 42, 52) durchgeführt wird.

2. Verfahren nach Anspruch 1,
wobei die Übertragung auf jedem der Komponententräger (32, 42, 52) auf der Basis eines weiteren Wiederholungssendungsprotokolls durchgeführt wird, das ein Senden einer Bestätigungsnachricht (24) in Reaktion auf ein Verifizieren des korrekten Empfangs einer Datennachricht (23) auf dem jeweiligen Komponententräger (32, 42, 52) erfordert.

3. Verfahren nach Anspruch 2, umfassend:
Deaktivieren in Reaktion auf die Entscheidung, Übertragung auf dem Komponententräger (32, 42, 52) zu deaktivieren, von Übertragung auf dem Komponententräger (32, 42, 52) ohne Wiederholungssendung von Datennachrichten (23) durch das weitere Wiederholungssendungsprotokoll.

4. Verfahren nach Anspruch 2 oder 3, umfassend:
Senden in Reaktion auf die Entscheidung, Übertragung auf dem Komponententräger (32, 42, 52) zu deaktivieren, einer Bestätigungsnachricht (24) des weiteren Wiederholungssendungsprotokolls ungeachtet des Verifizierens des korrekten Empfangs einer Datennachricht (23) auf dem Komponententräger (32, 42, 52).

5. Verfahren nach einem der Ansprüche 2 bis 4,
wobei eine Rückmeldezeit des weiteren Wiederholungssendungsprotokolls kürzer als eine Rückmeldezeit des Wiederholungssendungsprotokolls ist.

6. Verfahren nach einem der vorhergehenden Ansprüche, umfassend:
Empfangen einer Anzeige (301; 401; 403; 801, 804; 901, 908; 1001; 1101, 1108; 1201; 1301, 1307; 1401, 1403; 1501, 1506) der Entscheidung, Übertragung auf dem Komponententräger (32, 42, 52) zu deaktivieren.

7. Verfahren nach einem der vorhergehenden Ansprüche, umfassend:
Treffen der Entscheidung, Übertragung auf dem Komponententräger (32, 42, 52) zu deaktivieren.

8. Verfahren nach Anspruch 6 oder 7,
wobei die Kommunikation der Datennachrichten (21) ein Empfangen der Datennachrichten von einem Sender (210) umfasst, und
wobei das Verfahren ein Senden einer Wiederholungssendungs-Auslösenachricht (403; 804; 908; 1108; 1307; 1403; 1506) an den Sender (210) zum Auslösen der Wiederholungssendung durch das Wiederholungssendungsprotokoll umfasst.

9. Verfahren nach einem der Ansprüche 6 bis 8,
wobei die Kommunikation der Datennachrichten (21) ein Senden der Datennachrichten an einem Empfänger (220) umfasst, und
wobei das Verfahren die Wiederholungssendung durch das Wiederholungssendungsprotokoll umfasst.

10. Verfahren nach einem der vorhergehenden Ansprüche,
wobei der mindestens eine andere Komponententräger (32, 42, 52) aus einem Spektrum ist, das einer Funkzugangstechnologie zugeordnet ist, und der deaktivierte Komponententräger (32, 42, 52) aus einem Spektrum ist, das nicht dieser Funkzugangstechnologie zugeordnet ist.

11. Kommunikationsvorrichtung, umfassend:
eine Schnittstelle (130), die so konfiguriert ist, dass sie Datennachrichten (21) auf mehreren Komponententrägern (32, 42, 52) kommuniziert, wobei die Kommunikation auf der Basis eines Wiederholungssendungsprotokolls durchgeführt wird, das ein Senden einer Bestätigungsnachricht (22) in Reaktion auf ein Verifizieren des korrekten Empfangs einer Datennachricht der Datennachrichten (21) erfordert, und
eine Steuerung (11, 110), die so konfiguriert ist, dass sie in Reaktion auf eine Entscheidung, Übertragung auf einem der Komponententräger (32, 42, 52) zu deaktivieren, das Wiederholungssendungsprotokoll auslöst, um jene Datennachrichten (21), für welche keine Bestätigungsnachricht (22) des Wiederholungssendungsprotokolls empfangen wurde, erneut zu senden, wobei die Wiederholungssendung auf mindestens einem anderen der Komponententräger (32, 42, 52) durchgeführt wird.

12. Kommunikationsvorrichtung nach Anspruch 11,
wobei die Kommunikationsvorrichtung ein Funkzugangsknoten (100) ist.

13. Kommunikationsvorrichtung nach Anspruch 11, wobei die Kommunikationsvorrichtung ein mobiles Endgerät (10) ist.

14. Empfänger nach einem der Ansprüche 11 bis 13,
wobei die Kommunikationsvorrichtung so konfiguriert ist, dass sie gemäß dem Verfahren nach einem der Ansprüche 1 bis 10 funktioniert.

15. Kommunikationssystem, umfassend:
einen Sender (210), der eine Sendeinstanz (212) umfasst, die so konfiguriert ist, dass sie Datennachrichten (21) auf mehreren Komponententrägern überträgt, wobei die Übertragung auf der Basis eines Wiederholungssendungsprotokolls durchgeführt wird, das ein Senden einer Bestätigungsnachricht (22) in Reaktion auf ein Verifizieren des korrekten Empfangs einer Datennachricht der Datennachrichten (21) erfordert, und
einen Empfänger (220), der eine Empfangsinstanz (222) umfasst, die so konfiguriert ist, dass sie die Datennachrichten (21) auf der Basis des Wiederholungssendungsprotokolls empfängt,
wobei mindestens einer von dem Sender (210) und dem Empfänger (220) eine Steuerung (11, 110) umfasst, die so konfiguriert ist, dass sie in Reaktion auf eine Entscheidung, Übertragung auf einem der Komponententräger zu deaktivieren, das Wiederholungssendungsprotokoll auslöst, um jene Datennachrichten (21), für welche keine Bestätigungsnachricht (22) des Wiederholungssendungsprotokolls empfangen wurde, erneut zu senden, wobei die Wiederholungssendung auf mindestens einem anderen der Komponententräger durchgeführt wird.

16. Kommunikationssystem nach Anspruch 15,
wobei das Kommunikationssystem so konfiguriert ist, dass es gemäß dem Verfahren nach einem der Ansprüche 1 bis 10 funktioniert.

17. Computerprogrammprodukt, umfassend Programmcode, der durch einen Prozessor (150) einer Kommunikationsvorrichtung ausgeführt werden soll, um dadurch die Funkkommunikationsvorrichtung zu veranlassen, gemäß einem Verfahren nach einem der Ansprüche 1 bis 10 zu funktionieren.

## Revendications

1. Procédé de commande d'agrégation de porteuses de composants, comprenant :
une communication de messages de données (21) sur des porteuses de composants multiples (32,42,52), ladite communication étant accomplie sur la base d'un protocole de retransmission nécessitant l'envoi d'un message d'accusé de réception (22) en réponse à la vérification d'une réception correcte d'un message de données dans lesdits messages de données (21) et
en réponse à une décision de désactiver une transmission sur une des porteuses de composants (32,42,52), déclencher le protocole de retransmission pour retransmettre ces messages de données (21), pour lesquels aucun message d'accusé de réception (22) du protocole de retransmission n'a été reçu, ladite retransmission étant accomplie sur au moins une autre des porteuses de composant (32,42,52).

2. Procédé selon la revendication 1, dans lequel la transmission sur chacune des porteuses de composants (32,42,52) est accomplie sur la base d'un autre protocole de retransmission nécessitant l'envoi d'un message d'accusé de réception (24) en réponse à la vérification d'une réception correcte d'un message de données (23) sur la porteuse de composant respective (32, 42, 52) .

3. Procédé selon la revendication 2, comprenant de :
en réponse à la décision de désactiver une transmission sur la porteuse de composant (32,42,52), désactiver une transmission sur la porteuse de composant (32,42,52) sans retransmission des messages de données (23) par l'autre protocole de retransmission.

4. Procédé selon la revendication 2 ou 3, comprenant de :
en réponse à la décision de désactiver une transmission sur la porteuse de composant (32,42,52), envoyer un message d'accusé de réception (24) de l'autre protocole de retransmission sans tenir compte de la vérification d'une réception correcte d'un message de données (23) sur la porteuse de composant (32, 42, 52) .

5. Procédé selon une quelconque des revendications 2 à 4, dans lequel un temps de retour d'information de l'autre protocole de retransmission est plus court qu'un temps de retour d'information du protocole de retransmission.

6. Procédé selon une quelconque des revendications précédentes, comprenant de :
recevoir une indication (301 ;401 ; 403 ; 801,804 ; 901,908 ; 1001,1101,1108 ;1201 ,1301,1307 ; 1401,1403 ; 1501,1506) de la décision de désactiver une transmission sur la porteuse de composant (32,42,52).

7. Procédé selon une quelconque des revendications précédentes, comprenant de :
prendre la décision de désactiver une transmission sur la porteuse de composant (32,42,52).

8. Procédé selon la revendication 6 ou 7, dans lequel ladite communication des messages de données (21) comprend de recevoir les messages de données depuis un émetteur (210) et
dans lequel le procédé comprend d'envoyer un message de déclenchement de retransmission (403 ;408 ; 908 ;1108 ;1307 ;1403 ; 1506) vers l'émetteur (210) pour déclencher ladite retransmission par le protocole de retransmission.

9. Procédé selon une quelconque des revendications 6 à 8, dans lequel ladite communication des messages de données (21) comprend de transmettre les messages de données à un récepteur (220) et
dans lequel le procédé comprend ladite retransmission par le protocole de retransmission.

10. Procédé selon une quelconque des revendications précédentes, dans lequel au moins une autre porteuse de composant (32,42,52) est d'un spectre assigné à une technologie d'accès radio et la porteuse de composant désactivée (32,42,52) est d'un spectre assigné à cette technologie d'accès radio.

11. Dispositif de communication, comprenant :
une interface (130) configurée pour communiquer des messages de données (21) sur des porteuses de composants multiples (32,42,52), ladite communication étant accomplie sur la base d'un protocole de retransmission nécessitant l'envoi d'un message d'accusé de réception (22) en réponse à la vérification d'une réception correcte d'un message de données desdits messages de données (21) et
un contrôleur (11,110) configuré pour déclencher, en réponse à une décision de désactiver une transmission sur une des porteuses de composant (32,42,52), le protocole de retransmission pour retransmettre ces messages de données (21), pour lesquels aucun message d'accusé de réception (22) du protocole de retransmission n'a été reçu, sur au moins une autre des porteuses de composants (32,42,52).

12. Dispositif de communication selon la revendication 11, dans lequel le dispositif de communication est un noeud d'accès radio (100).

13. Dispositif de communication selon la revendication 11, dans lequel le dispositif de communication est un terminal mobile (10).

14. Récepteur selon une quelconque des revendications 11 à 13, dans lequel le dispositif de communication est configuré pour fonctionner conformément au procédé selon une quelconque des revendications 1 à 10.

15. Système de communication, comprenant :
un émetteur (210) comprenant une entité de transmission (212) configurée pour transmettre des messages de données (21) sur des porteuses de composants multiples, ladite transmission étant accomplie sur la base d'un protocole de retransmission envoyant un message d'accusé de réception (22) en réponse à la vérification d'une réception correcte d'un message de données desdits messages de données (21) et
un récepteur (200) comprenant une entité de réception (222) configurée pour recevoir les messages de données (21) sur la base du protocole de retransmission,
dans lequel au moins un de l'émetteur (210) et du récepteur (220) comprend un contrôleur (11,110) configuré pour déclencheur, en réponse à une décision de désactiver une transmission sur une des porteuses de composants, le protocole de retransmission retransmettant ces messages de données (21) pour lesquels aucun message d'accusé de réception (22) du protocole de retransmission n' a été reçu, ladite retransmission étant accomplie sur au moins une autre des porteuses de composants.

16. Système de communication selon la revendication 15, dans lequel le système de communication est configuré pour fonctionner conformément au procédé selon une quelconque des revendications 1 à 10.

17. Produit de programme informatique comprenant du code de programme à exécuter par un processeur (150) d'un dispositif de communication, en amenant ainsi le dispositif de communication radio à fonctionner selon un procédé tel que défini dans une quelconque des revendications 1 à 10.
